(19)

(11) **EP 2 670 668 B1**

(12) **EUROPÄISCHE PATENTSCHRIFT**

(45) Veröffentlichungstag und Bekanntmachung des Hinweises auf die Patenterteilung:
**04.03.2020 Patentblatt 2020/10**

(21) Anmeldenummer: **12700781.3**

(22) Anmeldetag: **17.01.2012**

(51) Int Cl.:
***B65B 3/02*** (2006.01) ***B67C 3/06*** (2006.01)
***B29C 49/12*** (2006.01) ***B29C 49/46*** (2006.01)

(86) Internationale Anmeldenummer:
**PCT/EP2012/000163**

(87) Internationale Veröffentlichungsnummer:
**WO 2012/104018 (09.08.2012 Gazette 2012/32)**

(54) **VERFAHREN SOWIE VORRICHTUNG ZUM HERSTELLEN VON MIT EINEM FLÜSSIGEN FÜLLGUT GEFÜLLTEN BEHÄLTERN**

METHOD AND DEVICE FOR PRODUCING CONTAINERS FILLED WITH A LIQUID PRODUCT

PROCÉDÉ ET DISPOSITIF DE FABRICATION DE RÉCIPIENTS REMPLIS AVEC UN PRODUIT LIQUIDE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:
**11.02.2011 DE 102011011076**
**31.01.2011 DE 102011009888**
**31.01.2011 DE 102011009889**
**28.02.2011 DE 102011012665**
**28.02.2011 DE 102011012664**

(43) Veröffentlichungstag der Anmeldung:
**11.12.2013 Patentblatt 2013/50**

(73) Patentinhaber: **KHS GmbH**
**44143 Dortmund (DE)**

(72) Erfinder:
- **CLÜSSERATH, Ludwig**
  **55543 Bad Kreuznach (DE)**
- **EHMER, Wilfried**
  **44227 Dortmund (DE)**

(74) Vertreter: **Meissner Bolte Partnerschaft mbB et al**
**Beselerstrasse 6**
**22607 Hamburg (DE)**

(56) Entgegenhaltungen:
**EP-A1- 0 331 137**
**EP-A1- 0 375 912**
**WO-A1-2010/003853**
**WO-A1-2011/076167**
**WO-A2-2007/120807**
**JP-A- 2000 043 129**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 670 668 B1

Printed by Jouve, 75001 PARIS (FR)

## Beschreibung

Die Erfindung betrifft ein Verfahren gemäß Oberbegriff Patentanspruch 1 sowie eine Vorrichtung gemäß Oberbegriff Patentanspruch 14. Die JP 2000 043129 A und die WO 2009/075791 A1 zeigen jeweils ein gattungsgemäßes Verfahren und eine gattungsgemäße Vorrichtung.

Bekannt ist die Herstellung von Behältern durch Blasformen aus Vorformlingen aus einem thermoplastischen Material, beispielsweise aus Vorformlingen aus PET (Polyethylenterephthalat), wobei die Vorformlinge innerhalb einer Blasmaschine unterschiedlichen Bearbeitungsstationen zugeführt werden (DE-OS 43 40 291).

Typischerweise weist eine Blasmaschine eine Heizeinrichtung zum Temperieren oder Vorerhitzen (thermisches Konditionieren) der Vorformlinge sowie eine Blaseinrichtung mit wenigstens einer Blasstation auf, in deren Bereich der jeweils zuvor temperierte Vorformling biaxial oder multiaxial zu einem Behälter expandiert wird. Die Expansion erfolgt mit Hilfe eines Druckgases (Druckluft) als Druckmedium, das mit einem Formdruck in den zu expandierenden Vorformling eingeleitet wird. Der verfahrenstechnische Ablauf bei einer derartigen Expansion des Vorformlings wird in der DE-OS 43 40 291 erläutert.

Der grundsätzliche Aufbau der Blasstation ist in der DE-OS 42 12 583 beschrieben. Möglichkeiten der Temperierung der Vorformlinge sind in der DE-OS 23 52 926 erläutert.

Gemäß einem typischen Weiterverarbeitungsverfahren werden die durch Blasformen hergestellten Behälter einer nachfolgenden Fülleinrichtung zugeführt und hier mit dem vorgesehenen Produkt oder Füllgut gefüllt. Es werden also eine separate·Biasmaschine und eine separate Füllmaschine verwendet. Bekannt ist es dabei auch, die separate Blasmaschine und die separate Füllmaschine zu einem Maschinenblock, d.h. zu einer verblockten Blas-Füll-Einrichtung zusammen zu fassen, wobei weiterhin das Blasformen und das Füllen an gesonderten Maschinenkomponenten und zeitlich nacheinander erfolgen.

Es wurde weiterhin bereits vorgeschlagen, Behälter, insbesondere auch in Form von Flaschen aus thermisch konditionierten bzw. vorerhitzten Vorformlingen herzustellen und dabei gleichzeitig mit einem flüssigen Füllgut zu füllen, welches als hydraulisches Druckmedium zum Expandieren des Vorformlings bzw. zum Ausformen des Behälters mit einem Form- und Fülldruck zugeführt wird, sodass zeitgleich mit dem Füllen der jeweilige Vorformling in den Behälter verformt wird. Eine gewisse Problematik besteht bei derartigen Verfahren darin, dass eine Verschmutzung der jeweiligen Form- und Füllstation bzw. der diese Station bildenden Form, die ähnlich einer Blasform einer Blasformmaschine zum Herstellen von Behältern aus thermisch konditionierten Vorformlingen durch Blasen mit einem Druckgas ausgeführt ist, vermieden werden muss. Speziell im Falle einer Voll- oder Teilkarbonisierung des Füllgutes besteht im besonderem Maße die Gefahr einer Verschmutzung der jeweiligen Form- und Füllstation durch Füllgutverluste, insbesondere bei der Absenkung des Innendrucks des Behälters, d.h. bei der Entlastung des Behälters von dem recht hohen Form- und Fülldruck auf den Umgebungsdruck. Derartige Füllgutverluste sind insbesondere durch eine massive Schaumbildung beim Entlasten bedingt, sodass das gleichzeitige Formen und Füllen von Behältern unter Verwendung von Vorformlingen und unter Verwendung des Füllgutes als Druckmedium (hydraulische Ausformtechnik), insbesondere für C02-haltige Produkte bisher nicht zum Einsatz kommen konnte.

Aufgabe der Erfindung ist es, ein Verfahren aufzuzeigen, welches die vorgenannten Nachteile vermeidet und bei der hydraulischen Ausformtechnik die Gefahr eines Verschmutzens der jeweiligen Form- und Füllstation auch bei einem C02-haltigen Füllgut vermeidet.

Zur Lösung dieser Aufgabe ist ein Verfahren zur Herstellung von mit einem flüssigen Füllgut gefüllten Behältern entsprechend dem Patentanspruch 1 ausgebildet. Eine Vorrichtung zur Herstellung von mit eine flüssigen Füllgut gefüllten Behälter ist Gegenstand des Patentanspruchs 14.

Bei der Erfindung erfolgt die Entlastung der gefüllten Behälter von dem hohen Form- und Fülldruck (z.B. im Bereich zwischen 8bar bis 15bar) auf den Atmosphären- oder Umgebungsdruck in wenigstens zwei Stufen, und zwar zunächst in wenigstens einer Vorentlastungsphase auf einen Vorentlastungsdruck, der deutlich kleiner ist als der Form- und Fülldruck, und dann zeitlich folgend in wenigstens einer Restentlastungsphase auf den Atmosphären- oder Umgebungsdruck. Diese stufenweise Entlastung vermeidet selbst bei einem Füllgut mit einem hohen CO2-Gehalt eine einen Produktverlust und damit eine Verschmutzung der jeweiligen Form- und Füllstation verursachende Schaumbildung. Erfindungsgemäß erfolgt das Formen und Füllen der Behälter mit einem stillen, d.h. CO2-freien flüssigen Füllgut. Nach Abschluss der Form- und Füllphase wird eine Karbonisierung des im Behälter befindlichen Füllgutes durch Einleiten von gasförmigem CO2 oder flüssigem H2CO3 durchgeführt, vorzugsweise nach dem Absenken des Behälterinnendrucks auf einen unterhalb des Form- und Fülldruckes liegenden Karbonisierungs- oder Vorentlastungsdruck.

Aus der EP 0331 137 A1 ist es aus dem Bereich der Abfüllung von karbonisierten Flüssigkeiten in fertige Behälter bekannt, dass die Druckentlastung in einem mehrstufigen Druckentlastungsprozess erfolgt, um ein starkes Aufschäumen der abgefüllten Flüssigkeit zu vermeiden. Aus der EP 0375 912 A1 ist es aus dem Bereich der Abfüllung von karbonisierten Flüssigkeiten in fertige Behälter bekannt, dass zur Erreichung kürzerer Füllzeiten die Befüllung mehrstufig erfolgt mit Flüssigkeiten, die einen unterschiedlichen Gehalt an CO2 aufweisen.

Der Ausdruck "im Wesentlichen" oder "etwa" bedeutet im Sinne der Erfindung Abweichungen von jeweils exakten Werten um +/- 10%, bevorzugt um +/- 5% und/oder Abweichungen in 0 Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:

| | |
|---|---|
| Fig. 1 | in schematischer Darstellung eine Anlage gemäß der Erfindung zum Herstellen von gefüllten und verschlossenen Behältern; |
| Fig. 2 | in vereinfachter Einzeldarstellung und im Schnitt einen Vorformling (Preform) zusammen mit einem eine Reckstange aufweisenden Teil einer Form- und Füllstation einer Form- und Füllmaschine der Anlage der Figur 1; |
| Fig. 3 | eine ähnliche Darstellung wie Figur 2, jedoch bei fertig ausgeformtem Behälter in Form einer Flasche; |
| Fig. 4 und 5 | jeweils in einem Diagramm den zeitlichen Druckverlauf des Behälterinnendrucks während einer Form- und Füllphase und während der anschließenden Entlastung des Behälters auf Umgebungsdruck |
| Fig. 6 | Diagramm des zeitlichen Druckverlauf des Behälterinnendrucks während einer Form- und Füllphase und während der anschließenden Karbonatisierung und Entlastung des Behälters auf Umgebungsdruck |

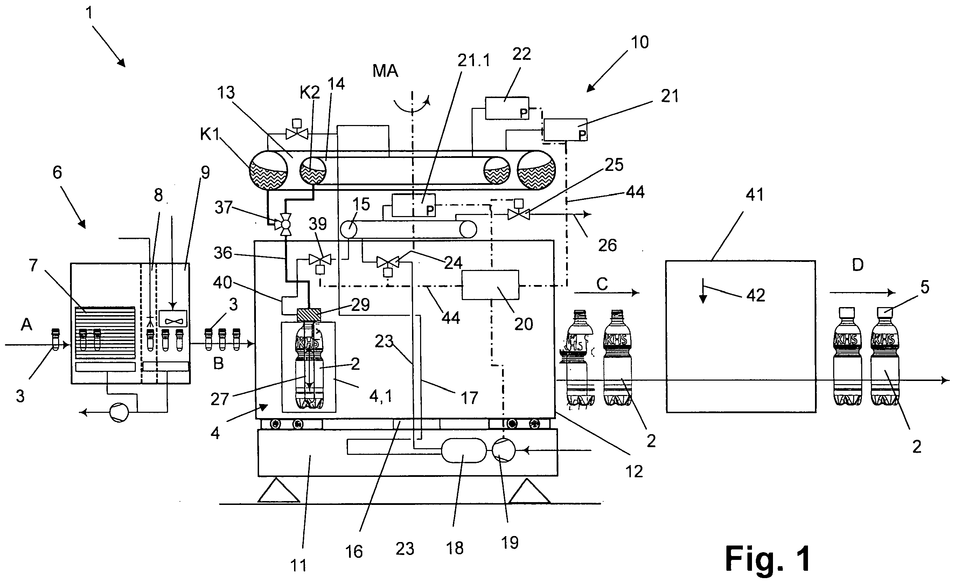

Die in der Figur 1 allgemein mit 1 bezeichnete Anlage dient zum Herstellen von gefüllten und verschlossenen Behältern 2 in Form von Flaschen unter Verwendung von Vorformlingen 3 (Preforms) aus einem thermoplastischen Material, beispielsweise aus Polyethylenterephthalat (PET), Polyethylen (PEE), Polyethylennaphthalat (PEN) oder Polypropylen (PP). Die Vorformlinge 3 sind hülsenartig mit einem offenen, die spätere Behältermündung 2.1 bildenden Ende 3.1, mit einem geschlossenen, den späteren Behälterboden 2.2 bildenden Boden 3.2 sowie mit einem den späteren Mündungsflansch 2.3 bildenden Flansch 3.3 ausgebildet.

Grundsätzlich erfolgt die Herstellung der mit einem flüssigen Füllgut gefüllten und verschlossenen Behälter 2 in der Weise, dass der jeweils konditionierte, d.h. vorerhitzte und in einer geschlossenen Form 4.1 eine Form- und Füllstation angeordnete Vorformling 3 mit dem unter hohem Form- und Fülldruck stehenden Füllgut beaufschlagt und durch dieses Füllgut hydraulisch in den jeweiligen Behälter 2 verformt wird. Der so geformte und zugleich gefüllte Behälter 2 wird dann nach seiner Entlastung auf Umgebungsdruck dicht verschlossen, d.h. an seiner Behältermündung 2.1 mit einem Verschlusselement 5, beispielsweise mit einem kappenartigen Verschlusselement versehen wird.

Zur Durchführung dieses Verfahrens umfasst die Anlage 1 u.a. eine Einrichtung 6, der die Vorformlinge 3 über einen nicht dargestellten Transporteur entsprechend den Pfeil A zugeführt werden und die an einem Auslass die konditionierten Vorformlinge 3, d.h. die mindestens auf Glasübergangstemperatur vorerhitzten Vorformlinge 3 bereitstellt. Die dargestellte Ausführungsform zeigt eine vorteilhafte Weiterbildung, wobei zugleich auch sterilisierten und getrockneten Vorformlinge 3 der Form 4.1 eine Form- und Füllstation 4 zugeleitet werden. Die Einrichtung 6 weist hierfür eine Heizstrecke 7 auf, in der das Vorheizen der Vorformlinge erfolgt, beispielsweise durch IR-Strahler, NIR-Strahler oder mittels Mikrowelle usw. Weiterhin erfolgt in einem weiteren Abschnitt 8 der Einrichtung 6 eine Beaufschlagung oder nebelartige Besprühung der erhitzten Vorformlinge 3 mit einem Sterilisationsmedium, beispielsweise mit einem erhitzten und/oder dampfförmigen, Wasserstoffperoxid enthaltenden Sterilisationsmedium oder Peressigsäure oder einem keimabtötendem Gas. In einem weiteren Abschnitt 9 der Einrichtung 6 erfolgt dann unter Verwendung von heißer Sterilluft das Aktivieren des Sterilisationsmediums sowie das Trocknen der konditionierten und sterilisierten Preforms 3. Diese werden dann über eine nicht dargestellte Transportstrecke entsprechend dem Pfeil B einem Preformeinlass einer Form- und Füllmaschine 10 zugeführt. Nicht gezeigt ist eine Variante, bei welcher statt des vorgenannten feuchten Sterilisierens, eine Sterilisierung mittels Strahlung erfolgt, insbesondere mittels UV-Strahlen, gepulsten UV-Strahlen, Elektronenstrahlen (E-Beam) oder einem sonstigen geeigneten Emitter.

Die Form- und Füllmaschine 10 umfasst u.a. einen an einem Maschinengestell 11 drehbar gelagerten und um eine vertikale Maschinenachse MA umlaufend antreibbaren Rotor 12, der in der Prinzipdarstellung der Figur 1 als Block angedeutet ist. An dem Rotor 12 sind in gleichmäßigen Winkelabständen um die Maschinenachse verteilt und in gleichem radialen Abstand von dieser Maschinenachse mehrere Form- und Füllstationen 4 mit jeweils einer Form 4.1 vorgesehen. Weiterhin sind bei der dargestellten Ausführungsform am Rotor 12 drei die Maschinenachse MA jeweils konzentrisch umschließende Ringkessel 13 - 15 vorgesehen, von denen während des Betriebes der Form- und Füllmaschine 10 der äußere, das größere Volumen aufweisende Ringkessel 13 mit der unter einem Füll- und Formdruck p2 bestehenden ersten Komponente K1 des flüssigen Füllgutes und der von dem Ringkessel 13 umschlossene Ringkessel 14 mit dem kleineren Volumen mit der ebenfalls unter dem Füll- und Formdruck p2 bestehenden zweiten Komponente K2 des Füllgutes gefüllt sind. Der in der Darstellung der Figur 1 unterhalb der Ringkessel 13 und 14 angeordnete und als Entlastungskanal dienende, leere Ringkessel 15 enthält ein Inertgas, z.B. Co2-Gas und ist mit dem Entlastungsdruck p1 beaufschlagt.

Die Kessel 13 und 14 sind mit den Komponenten K1 und K2 in der Regel jeweils nur teilgefüllt, sodass in den Ringkesseln 13 und 14 jeweils ein unterer Flüssigkeitsraum und darüber ein Gasraum gebildet ist, der mit einem unter dem Füll- und Formdruck p2 stehenden Inertgas, beispielsweise CO2-Gas oder Stickstoff gefüllt ist, welches über eine Drehdurchführung 16 aufweisende Inertgas-Verbindung 17 von einem im Maschinengestell 11 untergebrachten und vorzugsweise gekühlten Inertgas-Vorratsbehälter 18 bereitgestellt wird. Dem Vorratsbehälter 18 wird das Inertgas von einer nicht dargestellten Inertgas-Quelle über einen Verdichter 19 zugeführt, und zwar derart, dass in dem Inertgas-Vorratsbehälter 18 und damit auch in den Gasräumen der Ringkessel 13 und 14 der Füll- und Formdruck p2 in der erforderlichen Höhe aufrechterhalten bzw. konstant gehalten wird. Die hierfür notwendige Steuerung des Verdichters 19 erfolgt über eine Steuereinrichtung 20 in Abhängigkeit von Drucksensoren 21 und 22, die den Druck in den Ringkesseln 13 und 14 erfassen, wobei die Steuereinrichtung 20 über Datenleitungen und/oder drahtlose Datenverbindungen 44 mit den jeweiligen Sensoren sowie Steuer- und Regeleinheiten verbunden ist. Die Füllhöhe in den Kesseln 13 und 14 ist durch Niveauregelung oder - steuerung konstant gehalten.

Zur Aufrechterhaltung eines konstanten Vorentlastungsdrucks p1 im Ringkessel 15 ist dieser über eine weitere, die Drehdurchführung 16 einschließende Inertgasverbindung 23 ebenfalls mit dem Inertgas-Vorratsbehälter 18 verbunden. In der Inertgas-Verbindung 23 ist ein Steuerventil 24 vorgesehen. Ein weiteres Steuerventil 25 befindet sich in einer Entlüftungsleitung 26 des Ringkessels 15. Beide Steuerventile werden von der Steuereinheit 20 in Abhängigkeit von einem Drucksensor 27, der den Innendruck des Ringkessels 15 erfasst, so gesteuert, dass in dem Ringkessel 15 ständig ein dem Vorentlastungsdruck p1 entsprechender Inertgas-Druck herrscht.

Die Ringkessel 13, 14 und 15 sind selbstverständlich für sämtliche Formen 4.1 bzw. für sämtliche von diesen Formen gebildeten Form- und Füllpositionen der Form- und Füllmaschine 10 gemeinsam vorgesehen.

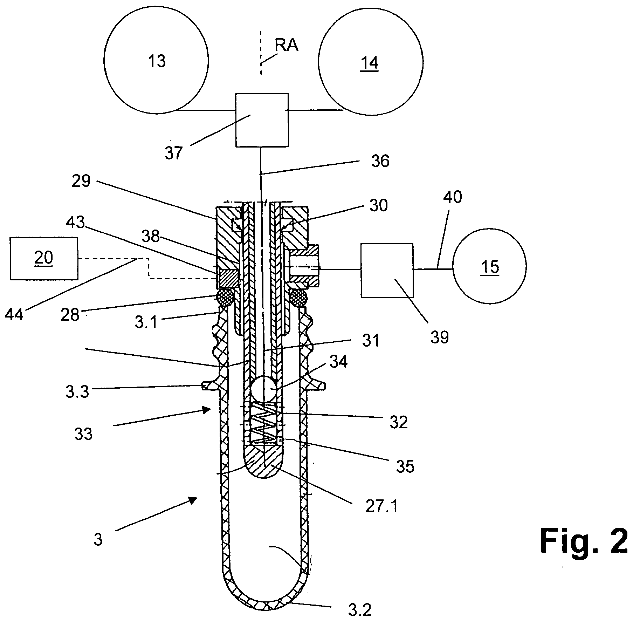

Jede Form 4.1 ist in ihrem Inneren bzw. in ihrem Formraum u.a. mit einer Reckstange 27 ausgebildet, die mit ihrer Längserstreckung oder Achse RA parallel zur vertikalen Maschinenachse MA orientiert ist und durch einen nicht dargestellten Antrieb, z.B. Steuerkurve synchron mit der Drehbewegung des Rotors 12 axial bewegbar ist, sodass beim Formen des jeweiligen Behälters 2 aus dem konditionierten Vorformling 3 die in diesen Vorformling hineinreichende Reckstange 27 mit ihrem in der Figur 2 unteren, abgerundeten Ende 27.1 gegen den Boden 3.1 des Vorformlings anliegt, diesen dadurch stabilisiert und unter Mitwirkung des über die Reckstange 27 in den Vorformling 3 eingeleiteten Füllgutes mit dem Füll- und Formdrucks p2 zunehmend in den Behälter 2 streckt, dessen äußere Formgebung dann durch die Innenfläche der Form 4.1 gebildet wird.

Wie die Figur 2 zeigt, befindet sich die jeweilige Preform 3 im Inneren der Form 4.1 in Dichtlage an einem einen Lagerkopf 29, d.h. sie liegt mit ihrem offenen, die spätere Behältermündung 2.1 bildenden Ende 3.1 über eine Dichtung 28 abgedichtet gegen den Lagerkopf 29 an, in welchem die Reckstange 27 mit einer Ringdichtung 30 abgedichtet axial geführt ist.

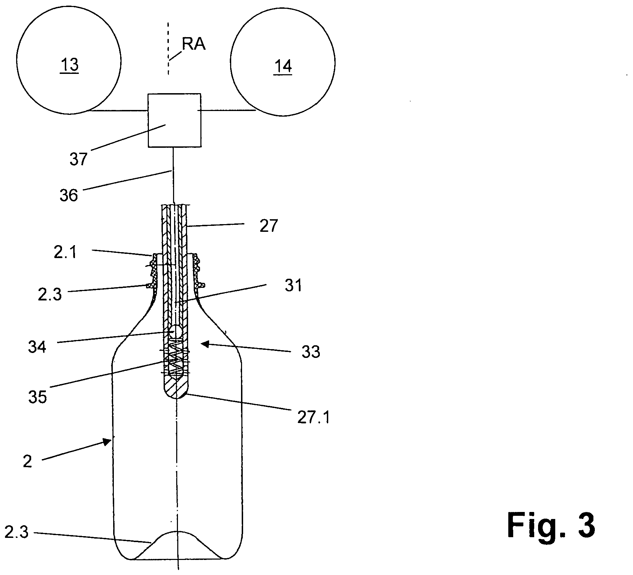

Bei der gezeigten Ausführungsvariante ist in der Reckstange 27 achsgleich mit der Achse RA ein Kanal 31 ausgebildet, der oberhalb des Endes 27.1 eine Vielzahl von radialen Austrittsöffnungen 32 aufweist und in dem vor den Austrittsöffnungen ein Rückschlagventil 33 mit Kugel 34 und Druckfeder 35 vorgesehen ist. Der Kanal 31 setzt sich an seinem den Austrittsöffnungen entfernt liegenden Ende in einer Flüssigkeitsverbindung 36 fort, die u.a. wenigstens ein Sperr- und Umschaltventil 37 enthält, über welches der Kanal 31 wahlweise mit dem Flüssigkeitsraum des Ringkessels 13 oder des Ringkessels 14 verbunden werden kann und mit welchem weiterhin die Verbindung zu beiden Ringkesseln 13 und 14 unterbrochen werden kann (s. auch Figur 3).

In dem Lagerkopf 28, der die Reckstange 27 ringförmig umschließt, ist ein Rückgaskanal 38 ausgebildet, der ebenfalls in den Innenraum des in Dichtlage am Lagerkopf 28 angeordneten Vorformlings 3 bzw. in den Innenraum des am Lagerkopf 29 in Dichtlage befindlichen Behälters mündet. Der Rückgaskanal 38 ist über eine ein Steuerventil 39 aufweisende Rückgasleitung mit dem Ringkessel 15 verbunden. Die Flüssigkeitsverbindung 36 mit ihrem z.B. von der Steuereinrichtung 20 gesteuerten Sperr- und Umschaltventil 37 sowie die Rückgasleitung 40 mit ihrem ebenfalls von der Steuereinrichtung 20 gesteuerten Steuerventil 39 sind für jede Form- und Füllstation 4 gesondert und individuell steuerbar vorgesehen.

Beispielsweise beim Befüllen der Behälter 2 mit einem CO2-entaltenden Füllgut sind die beiden Komponenten K1 und K2 hinsichtlich des Füllgutes identisch und unterscheiden sich lediglich dadurch, dass die Komponente K1 einen geringeren Anteil an CO2 enthält als die Komponente K2, wobei beim Formen und Füllen der Behälter 2 die Komponenten K1 und K2 so dosiert werden, dass das in den jeweiligen Behälter 2 eingebrachte Füllgut aus den Komponenten K1 und K2 den geforderten CO2-Gehalt aufweist. Hierbei besteht insbesondere auch die Möglichkeit, die Komponente K2 mit einer Temperatur bereit zu stellen, die niedriger ist als die Temperatur der Komponente K1, beispielsweise mit einer gegenüber der Komponente K1 um etwa 10° niedrigeren Temperatur. Die Temperatur der Komponente K1 entspricht beispielsweise der Umgebungstemperatur oder ist geringfügig höher als die Umgebungstemperatur. Das Einleiten der Komponenten beim Formen und Füllen der Behälter 2 erfolgt bevorzugt zeitlich nacheinander, und zwar zunächst die Komponente K1 und dann unmittelbar vor dem endgültigen Ausformen oder nach dem endgültigen Ausformen des jeweiligen Behälters unterschichtig die Komponente K2. Je nach Produkt, gewünschtem CO2-Sättigungsgrad und Produkttemperatur ist es ausreichend, nur einen einzigen Ringkessel (13) vorzusehen.

Mit der Form- und Füllmaschine 10 sind unterschiedlichste Verfahren möglich, wobei sämtlichen Verfahren gemeinsam ist, dass während des Füllens durch das zugeführte Füllgut unter dem Form- und Fülldruck p2 auch das Ausformen des jeweiligen Behälters 2 aus dem konditionierten Vorformling 3 in der entsprechenden Form 4.1 erfolgt.

Formen und Füllen der Behälter mit einem karbonisierten bzw. CO2-haltigen Füllgut:

Nach dem Einbringen des jeweiligen konditionierten Vorformlings 3 in eine Form 4.1 und nach dem Schließen der Form 4.1 erfolgt durch entsprechende Ansteuerung des zugehörigen Sperr- und Umschaltventils 37, beispielsweise in einer vorgegebenen Drehposition des Rotors 12 und/oder kurvengesteuert, das Einleiten des Füllgutes über die Reckstange 27 bzw. über die Austrittsöffnungen 32 in den Vorformling 3, der mit einem den Mündungsflansch 3.3 hintergreifenden Halter mit seiner Öffnung 3.1 in Dichtlage gegen die Ringdichtung 28 angepresst anliegt. Das dem Vorformling 3 zugeführte Füllgut weist den Form- und Fülldruck p2 auf, der beispielsweise im Bereich zwischen 8 und 15 bar. Mit zunehmender Verformung oder Expansion des Rohlings 3 wird zu dessen Streckung die mit ihrem Ende 27.1 gegen die Innenfläche des Bodens 3.2 anliegende Reckstange 27 axial nach unten bewegt, d.h. zunehmend aus dem Lagerkopf 29 ausgefahren, und zwar bei weiterhin dem Rohling 3 zufließenden Füllgut.

Erfolgt das Formen und Füllen des jeweiligen Behälters 2 unter Verwendung der beiden Komponenten K1 und K2, so werden während des Form- und Füllprozesses zunächst nur die keinen oder den geringeren Anteil an CO2 aufweisende Komponente K1 aus dem Ringkessel 13 in den Vorformling 3 bzw. in den sich bildenden Behälter 2 und dann durch entsprechendes Umschalten des Sperr- und Umschaltventils 37 zeitverzögert die den höheren Anteil an CO2 aufweisende Komponente K2 in den sich bildenden Behälter 2 eingebracht, z.B. die Komponente K2 erst kurz vor dem endgültigen Füllen und Ausformen des jeweiligen Behälters 2. Diese Reihenfolge ist insbesondere dann sinnvoll, wenn die den höheren Anteil an CO2 aufweisende Komponente K2 unter höherem Druck als die den geringeren Anteil an CO2 aufweisende Komponente K1 vorliegt. Das Einbringen der Komponente K2 erfolgt idealerweise über die Austrittsöffnungen 32, die sich dabei in der Nähe des Bodens 2.2 des sich bildenden Behälters 2 befinden, sodass die zweite Komponente K2 unterschichtig in das bereits in dem Behälter 2 befindliche Füllgut der Komponente K1 eingebracht wird, was zur Vermeidung einer Schaumbildung in positiver Weise beim Entlasten beiträgt. Das Umschalten des Sperr- und Schaltventils 37 von der Komponente K1 auf die Komponente K2 erfolgt beispielsweise zeit- und/oder kurvengesteuert.

Nach dem vollständigen Ausformen und Füllen des Behälters 2 wird die Flüssigkeitsverbindung 36 durch Schließen des Sperr- und Umschaltventils 37 gesperrt, sodass dann eventuell nach Ablauf einer nach dem Sperren des Sperr- und Umschaltventils eingeleiteten Beruhigungsphase die Form- und Füllphase abgeschlossen ist. Die Behälter 2 sind dann mit einem vorgegebenen Volumen des flüssigen Füllgutes derart gefüllt, dass über dem Füllgutspiegel im Behälter 2 noch ein mit Luft oder einem Gas gefüllter Kopfraum verbleibt.

Nach Abschluss der Form- und Füllphase erfolgt ein wenigstens einstufiges Vorentlasten des Behälters 2 auf einen noch über dem Umgebungsdruck p0 liegenden Vorentlastungsdruck p1, beispielsweise auf einen Vorentlastungsdruck p1 im Bereich zwischen 1,5 und 2,5 bar. Erst im Anschluss an eine weitere Beruhigungsphase erfolgt dann das endgültige Entlasten auf den Umgebungsdruck p0 in wenigstens einer Restentlastungsphase, wie dies nachstehend noch im Detail beschrieben wird.

Zumindest während der Vorentlastung ist der gefüllte Behälter 2 mit seiner Behältermündung 2.1 weiterhin über die Ringdichtung 28 in Dichtlage an dem Lagerkopf 29 gehalten. Die wenigstens einstufige Vorentlastung erfolgt durch gesteuertes öffnen des Steuerventils 39, sodass über den Rückgaskanal 38 und die Rückgasleitung 40 mit dem geöffneten Steuerventil 39 die wenigstens einstufige Vorentlastung in den Ringkessel 15 gesteuert erfolgen kann. Hierbei ist zur Erzielung eines reproduzierbaren Druckverlaufs sowie zur Steuerung des Druckverlaufs beim Vorentlasten in der Rückgasleitung 40 vorzugsweise wenigstens eine einen vorgegebenen Strömungsquerschnitt definierende Drossel oder eine vergleichbare Vorrichtung vorgesehen.

Das Volumen des Ringkessels 15 ist ausreichend groß gewählt, so dass das Vorentlasten der Behälter an unterschiedlichen Form- und Füllpositionen Druckschwankungen im Ringkessel 15 nicht oder im Wesentlichen nicht auftreten. Zusätzlich hierzu sind ein Drucksensor 21.1 und zwei Steuerventile 24, 25 vorgesehen, um den isobaren oder nahezu isobaren Zustand im Kesselinneren zu regeln bzw. sicher zu stellen.

Das Restentlasten erfolgt durch Aufheben der Dichtlage zwischen dem Behälter 2 und dem Lagerkopf 29, beispielsweise durch Absenken des Behälters 2 über den dann bestehenden Ringspalts zwischen der Ringdichtung 28 und der Behältermündung 2.1, und zwar beispielsweise bei geöffneter Form 4.1. Zumindest nach dem Restentlasten wir die Reckstange 27 in eine Ausgangsstellung zurückbewegt, in der sie nur geringfügig über die Ringdichtung 28 aufweisenden Seite des Lagerkopfes 29 vorsteht oder aber vollständig in den Lagerkopf 29 eingefahren ist, sodass sich die betreffende Form 4.1 dann in einem Zustand für die Aufnahme eines weiteren Vorformlings 3 befindet.

Während der sich an die Vorentlastung anschließenden Beruhigungsphase ist das Steuerventil 39 beispielsweise geöffnet und wird erst nach Ablauf dieser Beruhigungsphase und vor dem Einleiten der Restentlastung geschlossen. Die Zeitdauer der Beruhigungsphase, d.h. beispielsweise das Schließen des Steuerventils 39 am Ende der Beruhigungsphase erfolgt beispielsweise zeitgesteuert und/oder in Abhängigkeit von der Drehstellung des Rotors, beispielsweise durch wenigstens einen die jeweilige Drehstellung erfassenden elektrischen Sensor.

Der gefüllte Behälter 2 wird an einem Behälterauslauf der Form- und Füllmaschine 10 von dem Lagerkopf 29 abgenommen und mittels eines nicht dargestellten Transporteurs entsprechend dem Pfeil C einer Einrichtung 41 zum Verschließen der Behälter 2 mit den Verschlüssen 5 zugeführt.

Formen und Füllen der Behälter mit einem stillen bzw. CO2-freien Füllgut:
Die Form- und Füllphase erfolgt beispielsweise so, wie dies vorstehend für das Formen und Füllen der Behälter mit einem karbonisierten Füllgut beschrieben wurde, allerdings mit dem Unterschied, dass während der Form- und Füllphase ein stilles, d.h. CO-freies Füllgut in die jeweilige Vorform 3 eingeleitet wird. Eine Beruhigungsphase auf dem Form- und Fülldruck p2 ist nicht erforderlich.

Nach Beendigung der Form- und Füllphase erfolgt ein wenigstens zweistufiges Vorentlasten des jeweiligen Behälters, beispielsweise durch entsprechende Ansteuerung des Steuerventils 39, und zwar zunächst auf einen Teilentlastungs- oder Karbonisierungsdruck p1.1, p1.2, der noch deutlich über dem Vorentlastungsdruck p1 liegt, beispielsweise kleiner 6 bar ist. Bei diesem Teilentlastungs- oder Karbonisierungsdruck p1.1erfolgt dann bei in Dichtlage am Lagerkopf 29 angeordnetem Behälter 2 ein Begasen des Behälterinnenraums mit reinem CO2-Gas (Kohlensäure bzw. H2CO3). Dieses Begasen wird beispielsweise ebenfalls über den Kanal 31 der Reckstang 27 durchgeführt, und zwar mit dem zusätzlichen Vorteil, dass das Begasen des im Behälter 2 befindlichen Füllgutes über die sich mit ihrem Ende 27.1 in der Nähe des Behälterbodens 2.2 befindliche Reckstange 27 unterschichtig erfolgt und darüber hinaus beim Begasen durch das CO2-Gas auch im Kanal 31 befindliche Füllgutreste entfernt, zumindest weitestgehend entfernt werden, was zusätzlich dazu beiträgt, ein Nachtropfen des Füllgutes beim Abziehen des jeweils gefüllten Behälters 2 von dem Lagerkopf 29 zu vermeiden.

Der gefüllte Behälter 2 wird wiederum an einem Behälterauslauf der Form- und Füllmaschine 10 von dem Lagerkopf 29 abgenommen und mittels eines nicht dargestellten Transporteurs entsprechend dem Pfeil C einer Einrichtung 41 zum Verschließen der Behälter 2 mit den Verschlüssen 5 zugeführt.

Der Teilentlastungs- oder Karbonisierungsdruck p1.1, p1.2 ist bevorzugt in Abhängigkeit von der Temperatur und dem Schäumungsverhaltens des jeweiligen Füllgutes gewählt, d.h. die eine oder ggf. mehrere Druckstufen verkleinern sich mit steigender Temperatur des Füllgutes.

Nach Ablauf der Karbonisierungsphase, die beispielsweise auch eine Beruhigungsphase enthält, welche nach Beendigung des Begasens eingeleitet wird und in der der Innendruck des Behälters 2 auf dem Teilentlastungs- bzw. Karbonisierungsdruck p1.2 gehalten wird, erfolgt dann ein weiteres Vorentlasten auf den Vorentlastungsdruck p1. Dieser liegt bei diesem Verfahren vorzugsweise im Bereich zwischen 0,3 bar und 0,7 bar, besonders vorzugsweise 0,5 bar über dem Atmosphären- bzw. Umgebungsdruck. D.h. der Vorentlastungsdruck p1 beträgt in der Regel 1,3 bar bis 1,7 bar, vorzugsweise ca. 1,5 bar.

Nach Ablauf der an die Vorentlastung anschließenden Beruhigungsphase, in der der Behälter 2 wiederum auf dem Vorentlastungsdruck p1 gehalten wird, erfolgt in wenigstens einer Restentlastungsphase das Restentlasten auf Umgebungsdruck und dann das Abnehmen des gefüllten Behälters 2 aus der geöffneten Form 4.1 bzw. aus der entsprechenden Form- und Füllstation 4.

Die verschlossenen Behälter 2 werden entsprechend dem Pfeil C an eine weitere Komponente der Anlage 1 weitergeleitet. Die Transporteure zum Transportieren der Vorformlinge 3 sowie der Behälter 2 sind in der dem Fachmann bekannten üblichen Weise ausgeführt, und zwar vorzugsweise für einen hängenden Transport der Vorformlinge 3 und der Behälter 2.

Insbesondere ist es möglich, mit dieser Maschine gefüllte Behälter 2 herzustellen, die mit einem karbonisierten oder stillen bzw. CO2-freien Mischprodukt als Füllgut gefüllt sind, und zwar beispielsweise bestehend aus den beiden Komponenten K1 und K2, von denen die Komponente K1 eine Grundkomponente, beispielsweise karbonisiertes Wasser und die Komponente K2 eine Zusatzkomponente, beispielsweise eine geschmacksgebende Komponente sind und das Mischen beider Komponenten erst beim Formen und Füllen der Behälter 2 erfolgt.

Vorstehend wurde davon ausgegangen, dass die Füll- und Formphase zeitgesteuert und/oder gesteuert durch die Dreh- oder Winkelstellung des Rotors 12 erfolgt, und zwar mit der Annahme, dass in einer bestimmten Zeitspanne und/oder an einer bestimmten Winkelstellung des Rotors 12 der jeweilige Behälter 2 komplett ausgeformt und damit auch mit dem erforderlichen Volumen gefüllt ist. Grundsätzlich besteht aber auch die Möglichkeit, das während der jeweiligen Form- und Füllphase zufließende Füllgut durch Messeinrichtungen, beispielsweise durch magneto-induktive Durchflussmesseinrichtungen zu erfassen und mit den elektrischen Messsignalen dieser Einrichtungen die Dauer der jeweiligen Form- und Füllphase zu steuern.

Vorstehend wurde weiterhin davon ausgegangen, dass die Vorentlastung auf den Vorentlastungsdruck sowie die an diese Vorentlastung anschließende Beruhigungsphase zeitgesteuert und/oder durch die Winkelstellung des Rotors gesteuert werden. Grundsätzlich besteht auch die Möglichkeit, die Dauer der Vorentlastung und/oder der an die Vorentlastung anschließenden Beruhigungsphase in Abhängigkeit von Drucksensoren zu steuern, die den Innendruck der geformten und gefüllten Behälter 2 an den Form- und Füllpositionen erfassen.

Auch Kombinationen von Zeit- und Sensorsteuerung des Verfahrensablaufs sind möglich, beispielsweise in der Form, dass jeweils nur an einer oder aber an zwei Form- und Füllstationen, vorzugsweise an zwei um die Maschinenachse MA um 180° gegeneinander versetzten Form- und Füllstationen mit Hilfe von dortigen Sensoren die zugeführte Füllgutmenge und/oder Behälterinnendruck erfasst werden und mit den hierbei erzeugten Sensorsignalen die Zeitsteuerung für sämtliche Form- und Füllstationen eingestellt und/oder korrigiert wird.

Eine besonders vorteilhafte Verfahrens- und Vorrichtungsvariante ist in Figur 2 angedeutet und besteht darin, dass im Lagerkopf 29 eine Sensoreinheit 43 zur Überwachung des Kopfraumes bzw. des Füllgutes vorgesehen ist, die über Datenleitungen und/oder - verbindungen mit dem Steuerelement 20 verbunden ist. Diese Sensoreinheit 43 umfasst bspw. einen Impuls- und/oder Schwingungsgeber, zum Beispiel ein Ultraschallemitter, und ein entsprechendes Sensorelement, insbesondere ein Schall- und Schwingungssensor, wie zum Beispiel ein Piezosensor.

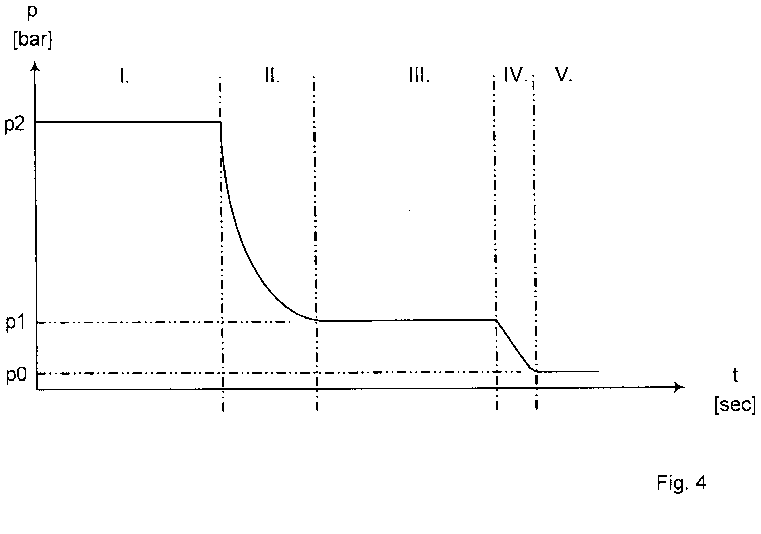

Während des Füllens und Formens wird die Schwingungscharakteristik des Gas- und/oder Flüssigkeitsvolumens und/oder der Preform- bzw. Behälterwandung erfasst und ausgewertet, wobei die IST-Schwingungs-Charakteristik mit einer erwarteten SOLL-Schwingungs-Charakteristik verglichen wird, die einer entsprechenden Auswerte- und Steuereinheit eingelernt wurde. Leckt oder platzt nun ein Behälter 2 bei dem Füll- und Formvorgang oder bildet sich bei einer der Druckentlastungsschritte unzulässig viel Schaum, wird dieses von dem Sensorelement 43 erfasst und zur Steuerung der laufenden und/oder nachfolgenden Verfahrensschritte herangezogen. Bildet sich bei einem Prozess, für den analog dem Diagramm aus Figur 4 eine zweistufige Entlastung vorgesehen ist, in der Vorentlastungsphase II. übermäßig viel Schaum im Kopfraum des Behälters 2, so kann zum Beispiel automatisch auf eine zweistufige Vorentlastungsphase II. umgestellt werden, im dem das Steuerventil 39 kurzzeitig wieder verschlossen wird. Einer derartigen kritischen Schaumbildung könnte auch entgegen gewirkt werden, indem die Druck-Verlaufscharakteristik in der Vorentlastungsphase II. verändert wird, zum Beispiel durch eine angepasste Entspannungszeit, also einem flacheren Gradienten und/oder, indem automatisch ein höherer Vorentlastungsdruck p1 gewählt wird.

Wird ein sehr sensibler Sensor gewählt, bspw. eine Piezo-Sensor, der zum Beispiel über eine mechanische Kopplung mit dem Preform 3 bzw. dem Behälter 2 direkt oder mittelbar in Kontakt steht, kann es ausreichend sein, das die Sensoreinheit 20 keinen zusätzlichen Schall- und/oder Schwingungsemitter umfasst, und die Erfassung und Auswertung des charakteristischen Eigenschwingungs- und/oder -resonanzverhalten bzw. die Abweichung hiervon ausreicht, um o.g. Verfahrensführung zu erreichen.

in Weiterhin besteht die Möglichkeit, den Innenraum des jeweiligen Vorformlings 3 vor dem Einleiten der Form- und Füllphase mit einem Inertgas, beispielsweise mit CO2-Gas oder Stickstoff zu spülen, z.B. mit dem CO2-Gas aus dem Ringkessel 15. Dieses Spülen kann dann z.B. durch gesteuertes, kurzzeitiges Öffnen des Steuerventils 39 über die Rückgasleitung 40 und den Rückgaskanal 38 erfolgen, wobei sich der Vorformling 3 noch nicht in Dichtlage an die Dichtung 28 des Lagerkopfes 29 befindet, sodass durch den Ringspalt zwischen der Ringdichtung 28 und der Öffnung 3.1 die im Vorformling 3 befindliche Luft mit dem zur Spülung verwendeten Inertgas ausgeblasen wird. Hierbei kann es auch zweckmäßig sein, das zum Spülen verwendete und dem Ringkessel 15 entnommene Inert- oder CO2-Gas zunächst zu trocknen. Durch das Spülen der Vorformlinge 3 mit Inertgas vor dem Einleiten der Form- und Füllphase ergibt sich die Möglichkeit, den Kopfraum des Vorformlings 3 bzw. des entstehenden Behälters 2 während der Form -und Füllphase mit dem Gasraum der Ringkessel 13 und/oder 14 zu verbinden, und zwar zum Rückführen eines evtl. beim Formen und Füllen aus dem Vorformling 3 bzw. aus dem entstehenden Behälter 2 verdrängten Gasvolumen.

Weiterhin kann es zweckmäßig sein, den jeweils in Dichtlage am Lagerkopf 29 befindlichen Vorformling 3 vor dem Einleiten des flüssigen Füllgutes mit einem unter Form- und Fülldruck p2 stehenden Inertgas, z.B. mit CO2-Gas oder mit einem CO2-haltigen Gas vorzuspannen. Hierdurch können beim Einleiten des unter dem Form- und Fülldruck stehenden Füllgutes Druckstöße vermieden werden, die möglicherweise das Verfahren und/oder das ordnungsgemäße Ausformen der Behälter 2 stören. Derartige Druckstöße können bei fehlender Vorspannung mit einem Inertgas dadurch auftreten, dass beim Einleiten eines karbonisierten Füllgutes in den nicht vorgespannten Vorformling 3 CO2-Gas aus dem Füllgut austritt und dann bei ansteigendem Druck wieder im Füllgut gelöst wird.

Es ist bekannt, dass das Entmischungsverhalten und die Schaumbildung im hohen Maße von der Flüssigkeitstemperatur abhängig ist. In der Lebensmittelindustrie ist es in vielen Fälle so, dass das abzufüllende Produkt in ungekühlten Tanks zwischengelagert wird, oder direkt aus der Herstellung mit unterschiedlichen Temperaturen anfällt. Somit besteht eine besonders vorteilhafte Verfahrensvariante darin, dass die gesamte Entlastungsphase, bestehend aus der wenigstens einstufigen Vorentlastung, der sich an diese anschließenden Beruhigungsphase und der sich daran anschließenden Restentlastung, in Abhängigkeit von der Temperatur des Füllgutes zu steuern. Das heißt, die Temperatur in dem mindestens einen Füllgutkessel wird sensorisch erfasst und die Gesamtdauer der Entlastungsphase, insbesondere aber die die Dauer und/oder den Verlauf der Einzelphasen und/oder den Druck der Vorentlastung oder einer zusätzlichen Teilentlastung in Abhängigkeit von der Temperatur des Füllgutes zu steuern. Dies erfolgt beispielsweise in der Form, dass mit zunehmender Temperatur des Füllgutes auch die Dauer der Entlastungsphase und/oder deren Teilphasen und damit die Leistung der Anlage 1 insgesamt stufenlos verlängert werden, und zwar durch Erfassung der Füllguttemperatur in den Ringkesseln 13 und 14 und durch entsprechende Ansteuerung der Form- und Füllmaschine 10 über die Steuereinrichtung 20. Bei geringen Temperaturschwankungen reicht eine geringfügige Veränderung der Ruhephase, im Falle einer derartigen gestuften oder stufenlosen Steuerung muss natürlich auf alle angrenzenden Aggregate in geeigneter Weise Einfluss genommen werden. Bei einer verbesserten Vorrichtung bzw. einem optimieren Verfahren, wird stromaufwärts des Füllstellen eine Kühlung vorgesehen, die im Falle der Überschreitung einer kritischen Produkttemperatur durch Abkühlung mindestens von Teilen des Füllmediums, die Prozessstabilität sicher stellt.

Umgekehrt erlaubt ein sehr kaltes Produkt, zum Beispiel in kalten Regionen oder jahreszeitlich bedingt, kürzere Ruhephase oder den Wechsel von einer zweistufigen Vorentlastung auf eine einstufige Vorentlastung.

Unabhängig von dem speziellen Verfahren ist die Entlastung des jeweiligen Behälters von dem sehr hohen Form- und Fülldruck p2 (beispielsweise im Bereich zwischen 8bar und 15 bar, zum Teil sogar von über 20 bar) auf um Umgebungsdruck p0 problematisch. Insbesondere muss bei dieser Entlastung auch bei $CO_2$-haltigem Füllgut ein Verschmutzen der Formen 4.1 durch überschäumendes und/oder verspritztes Füllgut vermieden werden. Aus diesem Grund ist eine optimale Gestaltung der Entlastung bzw. deren Teilphasen unerlässlich.

Die Figur 4 zeigt in einem Diagramm den Verlauf Innendrucks des jeweiligen Behälters 2 während der Form- und Füllphase und der anschließenden Entlastungsphase in Abhängigkeit von der Zeit t. Während der Füll- und Formphase, die in dem Diagramm mit dem Zeitabschnitt I bezeichnet ist, ist der Innendruck des jeweiligen Behälters konstant oder im Wesentlichen konstant und entspricht dem Form- und Fülldruck p2 (beispielsweise im Bereich zwischen 8bar und 15 bar). Wie ausgeführt, kann die Form- und Füllphase I nach Beendigung des Füllgutflusses (durch Schließen des Sperr- und Umschaltventils 37) eine Vorberuhigungsphase enthalten, deren Dauer beispielsweise 0,2 bis 5 Sekunden beträgt.

An die Form- und Füllphase I schließt sich bei dem in der Figur 4 wiedergegebenen Verfahren eine Vorentlastungsphase II an, deren Dauer beispielsweise wenigstens 0,1 Sekunden maximal 1 Sekunden beträgt und die so ausgebildet ist, dass der Innendruck des Behälters 2 während dieser Vorentlastungsphase II auf den Vorentlastungsdruck p1 abgesenkt wird bzw. sich diesem Vorentlastungsdruck p1 asymptotisch annähernd, der beispielsweise im Bereich zwischen 1,2 bar und 2,5 bar liegt, und zwar z.B. bei einem Formen und Füllen der Behälter 2 mit einem bereits karbonisierten Füllgut im Bereich zwischen 1,4bar und 2,3 bar und bei einem Formen und geschichteten Füllen der Behälter 2, zum Beispiel mit einem zunächst $CO_2$-freien Füllgut mit anschließendem Karbonisieren im Bereich zwischen 1,3 bar und 1,7 bar und hierbei vorzugsweise 1,4 bis 1,6 bar beträgt.

Die Dauer der Vorentlastungsphase II beträgt wenigstens 0,1 Sekunden und maximal 1 Sekunde, vorzugsweise liegt die Dauer der Vorentlastungsphase II im Bereich zwischen 0,2 und 0,4 Sekunden.

An die Vorentlastungsphase II schließen sich eine Beruhigungsphase III an, in der der Innendruck des Behälters 2 konstant oder im Wesentlichen konstant auf dem Vorentlastungsdruck p1 gehalten wird. In dieser Phase steigen Gasbläschen von sich auslösendem $CO_2$ im Füllgut auf, die in den Ringkessel 15 mit isobarem Innendruck abgeführt werden. Die Dauer der Beruhigungsphase III beträgt beispielsweise wenigstens 0,5 Sekunden und maximal etwa 2 Sekunden, bevorzugt liegt die Dauer der Beruhigungsphase III im Bereich zwischen 0,6 und 1 Sekunde. Im Anschluss an die Beruhigungsphase III erfolgt in einer Restentlastungsphase IV ein Entlasten auf den Umgebungsdruck p0 oder einen Restdruck geringfügig über den Umgebungsdruck p0. Es hat sich überraschenderweise gezeigt, dass die in der Flasche nach der Beruhigungsphase sehr hoch stehenden Blasen und Bläschen, insbesondere die direkt unterhalb des Flüssigkeitsspiels in der Flasche oder dem Behälter befindlichen, nicht oder fast nicht mehr zur Schaumbildung neigen.

Die Restentlastungsphase IV weist einen relativ steilen Druckabfall auf und besitzt eine Dauer von wenigstens 0,05 Sekunden und maximal 0,5 Sekunden. Bevorzugt liegt die Dauer der Restentlastungsphase IV im Bereich zwischen 0,08 und 0,15 Sekunden. Am Ende der Restentlastungsphase IV ist der jeweilige Behälter 2 vollständig auf den Umgebungsdruck p0 entlastet (hierzu Kurvenabschnitt V der Figur 4).

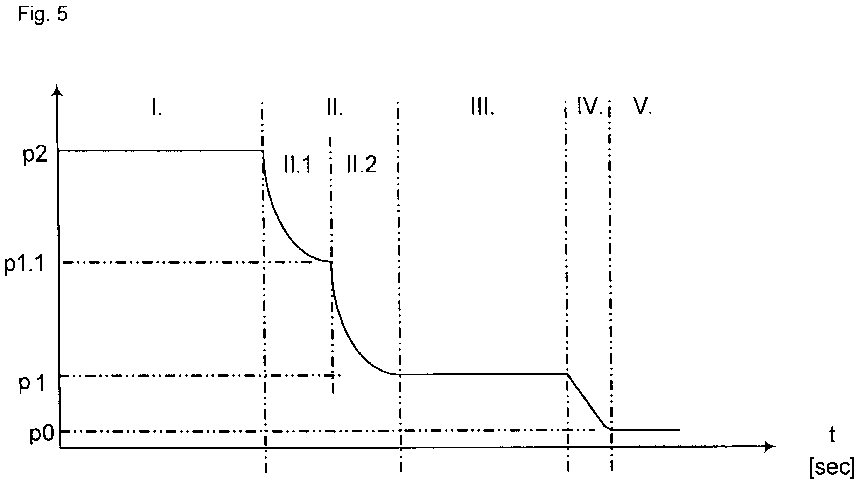

Die Figur 5 zeigt in einem Diagramm die zeitliche Abhängigkeit des Innendruckes des Behälters 2 während der Form- und Füllphase I, der Vorentlastungsphase II, der Beruhigungsphase III, der Restentlastungsphase IV und nach der Entlastung auf dem Umgebungsdruck (Kurvenabschnitt V). Das in der Figur 5 dargestellte Verfahren unterscheidet sich von dem Verfahren der Figur 4 im Wesentlichen nur dadurch, dass die Vorentlastung stufenförmig durchgeführt wird, so dass die Vorentlastungsphase II zwei Teilphasen II.1 und II.2 aufweist. Während der Vorentlastung wird der jeweilige Behälter 2 nach Beendigung der Form- und Füllphase I zunächst auf einen Teilentlastungsdruck p1.1 und dann in einer weiteren Teilphase II.2 endgültig auf den Vorentlastungsdruck p1 entlastet. Die Vorentlastung auf den Teilentlastungsdruck p1.1 erfolgt beispielsweise durch kurzzeitiges Öffnen und Schließen des Steuerventils 39, vorzugsweise unter Berücksichtigung einer für diese Teilentlastung im Gaskanal 40 vorgesehene Drossel. Das Öffnen und Schließen des die Teilentlastung bewirkenden Ventils, beispielsweise des Steuerventils 39 erfolgt zeitgesteuert und/oder aufgrund von Messsignalen, die von den Innendruck der Behälter 2 erfassenden Sensoren geliefert werden. Grundsätzlich besteht hierbei wiederum die Möglichkeit einer Kombination der Zeit- und Sensorsteuerung in der Weise, dass an einer Form- oder Füllstation oder an zwei derartigen Stationen Drucksensoren vorgesehen sind, und dass die Zeitsteuerung für die Teilphasen II.1 und/oder II.2 in Abhängigkeit von dem Messsignal dieser Drucksensoren für sämtliche Form- und Füllstationen eingestellt und/oder korrigiert wird. Grundsätzlich besteht weiterhin auch die Möglichkeit zusätzlich zu dem Ringkessel 15 am Rotor 12 einen weiteren Ringkessel vorzusehen, der mit einem Inert- oder $CO_2$-Gas mit dem Teilentlastungsdruck p1.1 gefüllt ist, sodass die Teilentlastung dann in diesem zusätzlichen Ringkessel erfolgen kann. Der Teilentlastungsdruck p1.1 liegt bereits deutlich unter dem Form- und Fülldruck p2 aber ausreichend über dem Entlastungsdruck p1. Der Abstand zwischen dem Teilentlastungsdruck p1.1 und dem Vorentlastungsdruck p1 entspricht beispielsweise maximal dem halben Abstand zwischen dem Form- und Fülldruck p2 und dem Vorentlastungsdruck p1:

$$(p1.1 - p1) \leq 1/2 \times (p2 - p1).$$

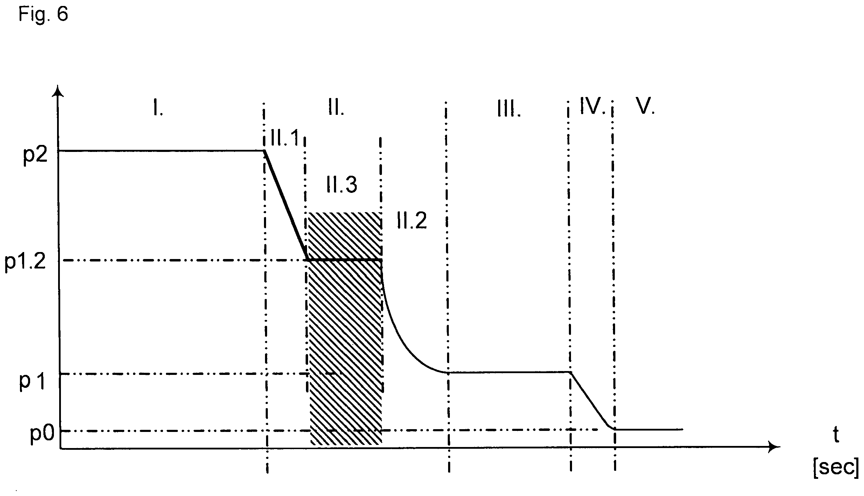

Bevorzugt beträgt die Differenz zwischen dem Teilentlastungsdruck p1.1 und Vorentlastungsdruck p1 in der Phase II.1 etwa 30% bis 50 % der Differenz zwischen dem Form- und Fülldruck p2 und dem Vorentlastungsdruck p1. Letzteres gilt insbesondere bei einem Formen und Füllen der Behälter 2 mit einem karbonisierten Füllgut oder mit Komponenten eines karbonisierten Füllgutes. Bei einer Alternative, nämlich einem Verfahren, bei dem zum Formen und Füllen des jeweiligen Behälters 2 in diesen zunächst ein ausschließlich stilles Füllgut eingebracht wird und nach einer Teilentlastung das Karbonisieren des Füllgutes erfolgt, beträgt der Teilentlastungsdruck p1.2 übliche Karbonatisierungsdrücke, von 5 bis 8 bar, wobei der notwendige Teilentlastungsdruck p1.2 mit abnehmender Temperatur des Füllgutes ebenfalls abnimmt. Die Figur 6 zeigt in einem Diagramm die zeitliche Abhängigkeit des Innendruckes des Behälters 2 während der Form- und Füllphase I, der Vorentlastungsphase II mit einer Karbonatisierungsphase II.3, der Beruhigungsphase III, der Restentlastungsphase IV und nach der Entlastung auf dem Umgebungsdruck (Kurvenabschnitt V). Das in der Figur 6 dargestellte Verfahren unterscheidet sich von dem Verfahren der Figur 4 im Wesentlichen nur dadurch, dass die Vorentlastung in einer ersten Entlastungsstufe bis zu dem Karbonatisierungsdruck p1.2 durchgeführt wird, dann die Karbonatisierung mit gasförmigem $CO_2$ oder flüssigem $H_2CO_3$ erfolgt, so dass die Vorentlastungsphase insgesamt zwei Teilentlastungsstufen II.1 und II.2 aufweist, zwischen denen die Karbonatisierungsphase liegt. Der Druckverlauf ist in dem Diagramm als Isobare dargestellt, wobei im Betrieb ein leichter Druckanstieg erfolgen und toleriert werden kann. Nachfolgend wird wiederum eine Ruhephase III. durchlaufen.

Nach der Vorentlastung auf den Vorentlastungsdruck im Bereich zwischen 1,2 bar und 2,5 bar erfolgt bei diesem Vorentlastungsdruck die Beruhigungsphase III, deren Dauer wenigstens 0,5 Sekunden und in Ausnahmefällen maximal 4 Sekunden, üblicherweise im Bereich von 0,6 bis 1,5 Sekunden beträgt. Im Anschluss daran erfolgt die schnelle Restentlastungsphase

Soweit in den verschiedenen Phasen eine Zeitsteuerung erfolgt, werden die entsprechenden Steuerzeiten u.a. empirisch und/oder unter Berücksichtigung verschiedener Verfahrensparameter übermittelt und z.B. in einem der Form- und Füllmaschine 10 oder der Anlage 1 zugeordneten Datenspeicher abgelegt. Die für die Takt- und Steuerzeiten wesentlichen Parameter sind beispielsweise Drehgeschwindigkeit des Rotors 12, Druck, Temperatur und/oder $CO_2$-Gehalt des Füllgutes, Größe und/oder Form der Behälter 2, Reckgeschwindigkeit usw.

Vor dem Verschließen der gefüllten Behälter 2 erfolgt beispielsweise noch ein Verdrängen von im Kopfraum der Behälter 2 vorhandener unerwünschter Luft- und/oder Gasreste, beispielsweise dadurch, dass über wenigstens eine Düse 42 in den jeweiligen Behälter 2 durch dessen Behältermündung 2.1 ein Strahl eines inerten Gases, beispielsweise ein Stickstoffstrahl eingebracht wird, der nicht nur den Kopfraum mit dem Inertgas ausfüllt und damit unerwünschte Luft- und/oder Gasreste aus dem Kopfraum entfernt, sondern bei einem karbonisierten Füllgut zugleich ein gesteuertes Aufschäumen bewirkt, und zwar ebenfalls zur Verdrängung von unerwünschten Luft- und/oder Dampf- und/oder Gasresten.

Die Erfindung wurde voranstehend an Ausführungsbeispielen beschrieben. Es versteht sich, dass zahlreiche Änderungen sowie Abwandlungen möglich sind, ohne dass dadurch der der Erfindung zugrundeliegende Erfindungsgedanke verlassen wird.

**Bezugszeichenliste**

| | | | |
|---|---|---|---|
| 1 | Anlage | 27 | Reckstange |
| 2 | Behälter | 27.1 | abgerundetes Reckstangenende |
| 2.1 | Behältermündung | | |
| 2.2 | Behältreboden | 28 | Ringdichtung |
| 2.3 | Mündungsflansch | 29 | Lagerkopf |
| 3 | Vorformling | 30 | Ringdichtung |
| 3.1 | offenes Ende des Vorformlings | 31 | Kanal in der Reckstange 27 |
| | | 32 | Austrittsöffnung |
| 3.2 | Boden des Vorformlings | 33 | Rückschlagventil |
| 3.3 | Mündungsflansch | 34 | Kugel |
| 4.1 | Form | 35 | Feder |
| 5 | Verschluss | 36 | Flüssigkeitsverbindung |
| 6 | Konditionierungseinrichtung | 37 | Sperr- und Umschaltventil |

(fortgesetzt)

| | | | |
|---|---|---|---|
| | der Vorformlinge 3 | 38 | Rückgaskanal |
| 7 | Heizeinrichtung | 39 | Steuerventil |
| 8, 9 | Abschnitt der Einrichtung 6 | 40 | Rückgasleitung |
| 10 | Form- und Füllmaschine | 41 | Einrichtung zum |
| 11 | Maschinengestellt | | Verschließen |
| 12 | Rotor | 42 | Düse |
| 13, 14, 15 | Ringkessel | 43 | Sensoreinheit |
| 16 | Drehdurchführung | 44 | Datenleitung/-verbindung |
| 17 | Inertgas-Verbindung | | |
| 18 | Inertgas-Vorratsbehälter | A, B | Transportrichtung der |
| 19 | Verdichter | | Vorformlinge 3 |
| 20 | Steuereinrichtung | C, D | Transportrichtung der |
| 21, 21.1, 22 | Drucksensor | | Behälter 2 |
| 23 | Inertgas-Verbindung | Ma | Maschinenachse |
| 24, 25 | Steuerventil | RA | Reckstangenachse |
| 26 | Entlüftungsleitung | | |

## Patentansprüche

1. Verfahren zur Herstellung von gefüllten Behältern (2) aus Vorformlingen (3) aus einem thermoplastischen Material, wobei der jeweilige Vorformling (3) zumindest thermisch konditioniert und anschließend während einer Form- und Füllphase in einer Form (4.1) durch Druckeinwirkung des zugeführten Füllguts in den jeweiligen Behälter (2) bei einem Form- und Fülldruck (p2) umgeformt wird, wobei der Vorformling (3) während der Form- und Füllphase zumindest zeitweilig durch eine Reckstange (27) geführt und/oder in Achsrichtung (RA) gestreckt wird, und wobei zumindest am Ende der Form- und Füllphase der jeweilige Behälter (2) einen dem Form- und Fülldruck (p2) entsprechenden Innendruck aufweist, **dadurch gekennzeichnet, dass** der geformte und gefüllte Behälter (2) nach Beendigung der Form- und Füllphase (I) in einer wenigstens zweistufigen Entlastungsphase (II - IV) auf Atmosphärenbzw. Umgebungsdruck (p0) entlastet wird, wobei das Formen und Füllen der Behälter (2) mit einem stillen, d.h. CO2-freien flüssigen Füllgut erfolgt, und dass nach Abschluss der Form- und Füllphase eine Karbonisierung des im Behälter befindlichen Füllgutes durch Einleiten von gasförmigem CO2 oder flüssigem H2CO3 durchgeführt wird, vorzugsweise nach dem Absenken des Behälterinnendrucks auf einen unterhalb des Form- und Fülldruckes (p2) liegenden Karbonisierungs- oder Vorentlastungsdruck (p1.1).

2. Verfahren nach Anspruch 1, **dadurch gekennzeichnet, dass** der Innendruck (p2) des geformten und gefüllten Behälters (2) nach Abschluss der Form- und Füllphase in einer zumindest einstufigen Vorentlastungsphase (II) auf einen Vorentlastungsdruck (p1) abgesenkt wird, der beispielsweise etwa 1,2 bar bis 2,5 bar beträgt, dass der Innendruck des Behälters (2) in einer an die Vorentlastungsphase (II) anschließenden Beruhigungsphase (III) auf einem konstanten oder im Wesentlichen konstanten, dem Vorentlastungsdruck (p1) entsprechenden Druck gehalten wird, und dass in einer wenigstens einstufigen, auf die wenigstens eine Beruhigungsphase (III) folgenden Restentlastungsphase (IV) ein Entlasten des Behälters (2) auf den Atmosphären- oder Umgebungsdruck (p0) erfolgt.

3. Verfahren nach Anspruch 2, **dadurch gekennzeichnet, dass** der zeitliche Verlauf des Behälterinnendrucks während der Entlastung so gewählt ist, dass die Steigung des zeitlichen Verlaufs am Ende wenigstens einer Phase, beispielsweise am Ende der Vorentlastungsphase (II) gleich dem zeitlichen Druckverlauf einer nachfolgenden Phase, beispielsweise der wenigstens einen Beruhigungsphase (III) ist, wobei vorzugsweise der zeitliche Verlauf des Behälterinnendrucks am Ende der Vorentlastungsphase mit einer Steigung Null oder im Wesentlichen Null in den zeitlichen Verlauf des Behälterinnendrucks der wenigstens einen Beruhigungsphase (III) übergeht.

4. Verfahren nach einem der vorhergehenden Ansprüche, **dadurch gekennzeichnet, dass** die Vorentlastungsphase (II) wenigstens zweistufig mit wenigstens zwei Teilphasen (11.1, 11.2) ausgeführt wird, wobei der Behälterinnendruck in einer ersten Teilphase (11.1) auf einen Teilentlastungsdruck (p1.1) abgesenkt wird, und dass beispielsweise die zeitlichen Druckverläufe des Behälterinnendrucks während der Teilphasen (11.1, 11.2) hinsichtlich des Gradienten/-verlaufes des Druckverlaufs bzw. hinsichtlich des zeitlichen Verlaufs der Steigung unterschiedlich und/oder beispielsweise an dem Übergang zwischen den wenigstens zwei Teilphasen (11.1, 11.2) eine unterschiedliche Steigung aufweisen.

5. Verfahren nach einem der vorhergehenden Ansprüche, **dadurch gekennzeichnet, dass** nach dem Formen und Füllen des jeweiligen Behälters (2) der Behälterinnendruck während einer zusätzlichen Beruhigungsphase auf einem dem Form- und Fülldruck (p2) entsprechenden konstanten oder im Wesentlichen konstanten Druck gehalten wird.

6. Verfahren nach einem der vorhergehenden Ansprüche, **dadurch gekennzeichnet, dass** das Formen und Füllen des jeweiligen Behälters (2) mit einem karbonisierten Füllgut in wenigstens zwei Prozessphasen derart erfolgt, dass in unterschiedlichen Prozessphasen Füllgut mit unterschiedlichem CO2-Gehalt und/oder mit unterschiedlicher Temperatur zugeführt wird, beispielsweise in einer ersten Prozessphase eine Komponente (K1) des Füllgutes ohne CO2-Gehalt oder mit einem reduzierten CO2-Gehalt und in einer Prozessphase eine weitere Komponente (K2) des Füllgutes mit erhöhtem CO2-Gehalt.

7. Verfahren nach Anspruch 6, **dadurch gekennzeichnet, dass** die Komponente (K2) des Füllgutes mit der höheren CO2-Konzentration eine gegenüber der anderen Komponente (K1) reduzierte Temperatur aufweist und/oder vor dem Einleiten gekühlt wird, und/oder dass die wenigstens eine Komponente mit der höheren CO2-Konzentration unterschichtig in das in dem Behälter (2) oder in dem entstehenden Behälter (2) bereits vorhandene Füllgut eingebracht wird.

8. Verfahren nach einem der vorhergehenden Ansprüche, **dadurch gekennzeichnet, dass** der Form- und Fülldruck bis 20 bar, idealerweise 8 bar bis 15 bar beträgt, und/oder dass der Vorentlastungsdruck 10% bis 30% des Form- und Fülldruckes (p2) beträgt, beispielsweise wenigstens 1,2 bar und maximal 2,5 bar, vorzugsweise im Bereich zwischen 1,4 bar und 2,3 bar oder im Bereich zwischen 1,2 bar und 1,7 bar eingestellt ist, und/oder dass der Teilentlastungsdruck (p1.1) maximal gleich der halben Differenz zwischen dem Form- und Fülldruck (p2) und dem Vorentlastungsdruck (p1) ist, vorzugsweise in etwa 30% dieser Differenz entspricht und im Bereich von 6 bar bis 8 bar liegt.

9. Verfahren nach einem der vorhergehenden Ansprüche, **dadurch gekennzeichnet, dass** die Gesamtdauer der Vorentlastungsphase (II) wenigstens 0,1 Sekunden, maximal 1,0 Sekunden beträgt, vorzugsweise im Bereich zwischen 0,2 Sekunden und 0,4 Sekunden liegt, und/oder dass die Gesamtdauer der sich an die Teilentlastungsphase (II) anschließenden wenigstens einen Beruhigungsphase (III) wenigstens 0,5 Sekunden und maximal 2 Sekunden beträgt, vorzugsweise im Bereich zwischen 0,6 Sekunden und 1 Sekunde liegt, und/oder dass die Gesamtdauer der Restentlastungsphase (IV) wenigstens 0,1 Sekunden und maximal 0,5 Sekunden beträgt, vorzugsweise im Bereich zwischen 0,1 Sekunde und 0,2 Sekunde liegt.

10. Verfahren nach einem der vorhergehenden Ansprüche, **dadurch gekennzeichnet, dass** die Form- und Füllphase (I) und/oder die Entlastungsphase (II) und/oder deren Teilphasen (11.1, 11.2) und/oder die wenigstens eine Beruhigungsphase (III) und/oder die wenigstens eine Restentlastungsphase (IV) in Abhängigkeit von der Drehstellung eines eine Vielzahl von Formen (4.1) aufweisenden und um eine vertikale Maschinenachse (MA) umlaufend antreibbaren Rotors (12) und/oder zeitgesteuert durchgeführt werden, wobei bei der Steuerung vorzugsweise u.a. füllgut- und/oder behälterspezifische Parameter, wie beispielsweise Art und/oder Temperatur und/oder CO2-Gehalt des Füllgutes, Größe des Form- und Fülldrucks (p2), Größe und Art der Behälter (2) berücksichtigt werden, und wobei die Zeitsteuerung z.B. durch von Sensoren, beispielsweise von die zufließende Füllgutmenge erfassenden Sensoren und/oder von Temperatur- und Drucksensoren überwacht und/oder korrigiert wird.

11. Verfahren nach einem der vorhergehenden Ansprüche, **dadurch gekennzeichnet, dass** die Zeitdauer des Entlastens der jeweiligen Behälter (2) von dem Form- und Fülldruck (p2) auf den Umgebungsdruck (p0) in Abhängigkeit von Temperatur des Füllgutes gesteuert wird, und zwar insbesondere durch Änderung der Zeitdauer der Entlastung und/oder deren Teilphasen und/oder die Höhe des Vorentlastungsdrucks und/oder des wenigstens einen Teilentlastungsdrucks, wobei die Zeitdauer der Entlastung und/oder die Zeitdauer wenigstens einer Teilphase der Entlastung mit zunehmender Temperatur des Füllgutes zunimmt.

12. Verfahren nach einem der vorhergehenden Ansprüche, **dadurch gekennzeichnet, dass** das die zu wählenden Druckniveaus beim Entlasten und/oder Karbonatisieren der jeweiligen Behälter (2) von dem Form- und Fülldruck (p2) auf den Umgebungsdruck (p0) in Abhängigkeit von Temperatur des Füllgutes gesteuert wird, und zwar insbesondere durch Änderung der Druckhöhen des Karbonatisierungsdrucks (p1.2) und/oder des wenigstens einen Teilentlastungsdrucks, wobei die erforderlichen Druckhöhen mit zunehmender Temperatur des Füllgutes zunehmen.

**13.** Verfahren nach einem der vorhergehenden Ansprüche, **dadurch gekennzeichnet, dass** der Innenraum des Vorformlings (3) vor der Form- und Füllphase mit einem Inertgas, beispielsweise mit $CO_2$-Gas gespült wird, und/oder dass der Vorformling (3) am Beginn der Form- und Füllphase mit einem Inertgas, beispielsweise mit $CO_2$-Gas vorgespannt wird, vorzugsweise auf einen Druck, der dem Form- und Fülldruck (p2) entspricht oder im Wesentlichen entspricht, und/oder dass der Vorformling (3) vor der Form- und Füllphase zumindest an seinen Innenflächen sterilisiert wird.

**14.** Vorrichtung zur Herstellung von mit einem flüssigen Füllgut gefüllten Behältern (2) aus zumindest thermisch konditionierten Vorformlingen (3) aus einem thermoplastischen Material, mit wenigstens einer Form- und Füllstation (4), mit wenigstens einer Flüssigkeitsverbindung (31, 36, 37) zum gesteuerten Zuführen des die Behälter (2) formenden und in diese abzufüllenden Füllgutes aus wenigstens einem dieses Füllgut unter einem Form- und Fülldruck (p2) enthaltenden Füllgutkessel (13, 14), wobei die Form- und Füllstation (4) eine Reckstange (27) zum zumindest zeitweiligen Führen und Strecken des jeweiligen Vorformlings (3) während der Form- und Füllphase (I) aufweist, wobei die Flüssigkeitsverbindung (36) zumindest teilweise von einem Kanal (31) in der Reckstange (27) gebildet ist, und wobei die Form- und Füllstation (4) eine ringförmigen Anlagefläche (28, 27) aufweist, gegen die der Vorformling (3) und der sich aus diesem formenden Behälter (2) zumindest während der Form- und Füllphase in Dichtlage anliegt, **gekennzeichnet durch** wenigstens einen gesteuerten Gasweg (39, 40), der über wenigstens einen Rückgaskanal (38), beispielsweise über einen die Reckstange (27) ringförmig umschließenden Rückgaskanal (38) innerhalb der ringförmigen Anlagefläche (28, 29) mündet, wobei die Vorrichtung ausgebildet ist, das Formen und Füllen der Behälter (2) mit einem stillen, d.h. $CO_2$-freien flüssigen Füllgut auszuführen, nach Abschluss der Form- und Füllphase eine Karbonisierung des im Behälter befindlichen Füllgutes durch Einleiten von gasförmigem $CO_2$ oder flüssigem $H_2CO_3$ auszuführen, vorzugsweise nach dem Absenken des Behälterinnendrucks auf einen unterhalb des Form- und Fülldruckes (p2) liegenden Karbonisierungs- oder Vorentlastungsdruck (p1.1).

**15.** Vorrichtung nach Anspruch 14, **dadurch gekennzeichnet, dass** der wenigstens eine Gasweg (23, 40) zumindest ein Element (24, 25, 39) aufweist, mit dem der Druck (p1) und/oder der Gasvolumenstrom kontinuierlich geregelt oder gesteuert werden kann.

**16.** Vorrichtung nach Anspruch 14 oder 15, **dadurch gekennzeichnet, dass** der Gasweg (23, 40) mit einem Puffervolumen, beispielsweise in Form eines Kessels oder Ringkessels (15) oder in Form einer Ringleitung verbunden ist, und dass das Puffervolumen mit einer Einrichtung zur Steuerung oder Regelung des Drucks verbunden ist.

**17.** Vorrichtung nach einem der vorhergehenden Ansprüche 14 bis 16, **dadurch gekennzeichnet, dass** der wenigstens eine Füllgutkessel als Ringkessel (13, 14) oder als Ringleitung ausgebildet ist, und zwar mit einem Volumen, welches einem Vielfachen des Füllvolumens eines Behälters (2) entspricht.

**18.** Vorrichtung nach einem der vorhergehenden Ansprüche 14 bis 17, **dadurch gekennzeichnet, dass** die Form- und Füllstationen (4) an einem eine vertikale Maschinenachse (MA) umlaufend antreibbaren Rotor (12) vorgesehen sind, und dass am Rotor der wenigstens eine Füllgutkessel (13, 14) und/oder der das Puffervolumen bildende Kessel (15) vorgesehen sind.

**19.** Vorrichtung nach einem der vorhergehenden Ansprüche 14 bis 18, **dadurch gekennzeichnet, dass** mindestens eine Kühleinheit vorgesehen ist, mittels welcher mindestens eine ein Füllgut und/oder Füllgutkomponente führende Leitung und/oder den Füllkessel gekühlt werden kann, insbesondere dass die mindestens eine Kühleinheit abhängig von der Produkttemperatur ein und ausschaltbar und/oder in ihrer Kühlleistung steuerbar ist.

**20.** Vorrichtung nach Anspruch 19, **dadurch gekennzeichnet, dass** eine Sensoreinheit 43 vorgesehen ist, welche mit der Steuereinheit 20 über Datenleitungen 44 oder drahtlose Datenverbindungen verbunden ist, mittels welcher SOLL- und IST-Füllzustände/-verlaufscharakteristiken und/oder Schaumbildungsverhalten erfassbar sind, insbesondere dass die Sensoreinheit einen Schall- und/oder Schwingungssensor umfasst, wie beispielsweise einen Piezo-Sensor.

**21.** Vorrichtung nach einem der vorhergehenden Ansprüche 14 bis 20, **dadurch gekennzeichnet, dass** Drucksensoren und Verdichtungs- und/oder Kompressionsvorrichtungen und/oder regelbare Ventile vorgesehen sind, mittels welcher im laufenden Betrieb die Druckniveaus aller Prozessstufen veränderbar sind.

## Claims

1. A method for producing filled containers (2) from preforms (3) made of a thermoplastic material, wherein the respective preform (3) is at least thermally conditioned and subsequently moulded into the respective container (2) at a moulding and filling pressure (p2) through pressure applied by the supplied filling material in a mould (4.1) during a moulding and filling phase, wherein the preform (3) is at least temporarily guided through a horizontal bar (27) and/or stretched in the axial direction (RA) during the moulding and filling phase, and wherein at least at the end of the moulding and filling phase the respective container (2) is at an internal pressure corresponding to the moulding and filling pressure (p2),
**characterised in that**

   - the moulded and filled container (2) is relieved to an atmospheric or ambient pressure (p0) in a at least two-stage relief phase (II - IV) after the moulding and filling phase (I) is complete, wherein the containers (2) are moulded and filled with a still, i.e. CO2-free liquid filling material, and that the filling material in the container is carbonized after the moulding and filling phase is complete by introducing gaseous CO2 or liquid H2CO3, preferably after the container's internal pressure is reduced to a carbonizing or preliminary relief pressure (p1.1) below the moulding and filling pressure (p2).

2. The method according to claim 1, **characterised in that** in a at least single-stage preliminary relief stage (II) after the moulding and filling phase is complete, the internal pressure (p2) of the moulded and filled container (2) is reduced to a preliminary relief pressure (p1), which for example is about 1.2 bar to 2.5 bar, that the container's (2) internal pressure is kept at a constant or substantially constant pressure corresponding to the preliminary relief pressure (p1) in a settling phase (III) subsequent to the preliminary relief stage (II), and that the container (2) is relieved to the atmospheric or ambient pressure (p0) in a at least single-stage residual relief phase (IV) subsequent to the at least one settling phase (III).

3. The method according to claim 2, **characterised in that** the time course of the container's internal pressure during the relief is selected such that the slope of the time course at the end of at least one phase, for example at the end of the preliminary relief stage (II), is equal to the pressure time course of a subsequent phase, for example the at least one settling phase (III), wherein the time course of the container's internal pressure preferably transitions into the time course of the container's internal pressure of the at least one settling phase (III) at the end of the preliminary relief stage with a slope of zero or substantially zero.

4. The method according to one of the previous claims, **characterised in that** the preliminary relief stage (II) is performed in at least two stages with at least two subphases (11.1, 11.2), wherein the container's internal pressure is reduced to a partial relief pressure (p1.1) in a first subphase (11.1), and that for example the pressure time courses of the container's internal pressure are different with respect to the gradient of the pressure course or with respect to the time course of the slope during the subphases (11.1, 11.2) and/or have a different slope for example at the transition between the at least two subphases (11.1, 11.2).

5. The method according to one of the previous claims, **characterised in that** after the moulding and filling of the respective container (2), the container's internal pressure is kept at a constant or substantially constant pressure corresponding to the moulding and filling pressure (p2) during an additional settling phase.

6. The method according to one of the previous claims, **characterised in that** the moulding and filling of the respective container (2) with a carbonized filling material in at least two process phases takes places in such a manner that filling material having a different CO2 content and/or a different temperature is supplied in different process phases, for example a component (K1) of the filling material having no CO2 content or having a reduced CO2 content in a first process phase and another component (K2) of the filling material having an increased CO2 content in a process phase.

7. The method according to claim 6, **characterised in that** the component (K2) of the filling material with the higher CO2 concentration has a reduced temperature in relation to the other component (K1) and/or is cooled prior to the introduction, and/or that the at least one component with the higher CO2 concentration is introduced into the filling material which is already inside the container (2) or inside the resulting container (2) from the bottom.

8. The method according to one of the previous claims, **characterised in that** the moulding and filling pressure is up to 20 bar, ideally is 8 bar to 15 bar, and/or that the preliminary relief pressure is 10% to 30% of the moulding and filling pressure (p2), for example at least 1.2 bar and at most 2.5 bar, is preferably set in the range between 1.4 bar and 2.3 bar or in the range between 1.2 bar and 1.7 bar, and/or that the partial relief pressure (p1.1) is at most equal to half the difference between the moulding and filling pressure (p2) and the preliminary relief pressure (p1), preferably equals this difference in about 30% and is in the range of 6 bar to 8 bar.

**9.** The method according to one of the previous claims, **characterised in that** the overall duration of the preliminary relief stage (II) is at least 0.1 seconds, at most 1.0 seconds, preferably in the range between 0.2 seconds and 0.4 seconds, and/or that the overall duration of the at least one settling phase (III) which is subsequent to the partial relief phase (II) is at least 0.5 seconds and at most 2 seconds, preferably in the range between 0.6 seconds and 1 second, and/or that the overall duration of the residual relief phase (IV) is at least 0.1 seconds and at most 0.5 seconds, preferably in the range between 0.1 seconds and 0.2 seconds.

**10.** The method according to one of the previous claims, **characterised in that** the moulding and filling phase (I) and/or the relief phase (II) and/or their subphases (11.1, 11.2) and/or the at least one settling phase (III) and/or the at least one residual relief phase (IV) are conducted depending on the rotational position of a rotor (12) which comprises a plurality of moulds (4.1) and can be driven rotating about a vertical machine axis (MA) and/or in a time-controlled manner, wherein for controlling preferably filling material and/or container specific parameters et al. are taken into account, like for example kind and/or temperature and/or $CO_2$ content of the filling material, amount of the moulding and filling pressure (p2), size and kind of the container (2), and wherein the time control is for example monitored and/or checked by sensors, for example by sensors detecting the inflowing filling material amount and/or temperature and pressure sensors.

**11.** The method according to one of the previous claims, **characterised in that** the duration of the relief of the respective container (2) of the moulding and filling pressure (p2) to the ambient pressure (p0) is controlled depending on the temperature of the filling material, namely especially by changing the duration of the relief and/or its subphases and/or the amount of the preliminary relief pressure and/or the at least one partial relief pressure, wherein the duration of the relief and/or the duration of at least one subphase of the relief increases as the temperature of the filling material increases.

**12.** The method according to one of the previous claims, **characterised in that** the pressure levels to be chosen for relieving and/or carbonizing the respective container (2) of the moulding and filling pressure (p2) to the ambient pressure (p0) are controlled depending on the temperature of the filling material, namely especially by changing the pressure levels of the carbonizing pressure (p1.2) and/or the at least one partial relief pressure, wherein the required pressure levels increase as the temperature of the filling material increases.

**13.** The method according to one of the previous claims, **characterised in that** the interior space of the preform (3) is flushed with an inert gas, for example with $CO_2$ gas, before the moulding and filling phase, and/or that the preform (3) is pressurized with an inert gas, for example with $CO_2$ gas, at the beginning of the moulding and filling phase, preferably to a pressure which corresponds to or substantially corresponds to the moulding and filling pressure (p2), and/or that the preform (3) is sterilized at least on its inner surfaces before the moulding and filling phase.

**14.** A device for producing containers (2) filled with a liquid filling material from at least thermally conditioned preforms (3) made of a thermoplastic material, comprising at least one moulding and filling station (4), comprising at least one fluid connection (31, 36, 37) for feeding the filling material moulding the containers (2) and to be filled into them from at least one filling material boiler (13, 14) containing this filling material under a moulding and filling pressure (p2) in a controlled manner, wherein the moulding and filling station (4) includes a horizontal bar (27) to at least temporarily guide and stretch the respective preform (3) during the moulding and filling phase (I), wherein the fluid connection (36) is at least partially formed by a channel (31) in the horizontal bar (27), and wherein the moulding and filling station (4) includes an annular contact surface (28, 27), against which the preform (3) and the container (2) moulding from it rest in a sealing relation at least during the moulding and filling phase, **characterized by** at least one controlled gas path (39, 40), which opens via at least one return gas channel (38), for example via a return gas channel (38) annularly surrounding the horizontal bar (27), within the annular contact surface (28, 29), wherein the device is configured to carry out the moulding and filling of the containers (2) with a still, i.e. $CO_2$-free liquid filling material, to carry out a carbonization of the filling material inside the container by introducing gaseous $CO_2$ or liquid $H_2CO_3$ after the moulding and filling phase is complete, preferably after the reduction of the container's internal pressure to a carbonizing or preliminary relief pressure (p1.1) below the moulding and filling pressure (p2).

**15.** The device according to claim 14, **characterised in that** the at least one gas path (23, 40) includes at least one element (24, 25, 39), which can be used to continuously regulate or control the pressure (p1) and/or the gas volume flow.

16. The device according to claim 14 or 15, **characterised in that** the gas path (23, 40) is connected to a buffer volume, for example in the form of a boiler or annular boiler (15) or in the form of a ring line, and that the buffer volume is connected to a means for controlling or regulating the pressure.

17. The device according to one of the previous claims 14 to 16, **characterised in that** the at least one filling material boiler is configured as an annular boiler (13, 14) or as a ring line, namely with a volume which corresponds to a multiple of the filling volume of one container (2).

18. The device according to one of the previous claims 14 to 17, **characterised in that** the moulding and filling stations (4) are provided at a rotor (12) which can be driven rotating about a vertical machine axis (MA), and that the at least one filling material boiler (13, 14) and/or the boiler (15) forming the buffer volume are provided at the rotor.

19. The device according to one of the previous claims 14 to 18, **characterised in that** at least one cooling unit is provided, by means of which at least one line carrying a filling material and/or filling material component and/or the filling boiler can be cooled, especially that the at least one cooling unit can be turned on and off depending on the product temperature and/or controlled in its cooling power.

20. The device according to claim 19, **characterised in that** one sensor unit 43 is provided, which is connected to the control unit 20 via data lines 44 or wireless data connections, by means of which DESIRED and ACTUAL filling levels/pattern characteristics and/or foaming behaviour can be sensed, especially that the sensor unit comprises an acoustic and/or vibration sensor, for example a piezo sensor.

21. The device according to one of the previous claims 14 to 20, **characterised in that** pressure sensors and compacting and/or compressing devices and/or controllable valves are provided, by means of which the pressure levels of all process stages can be changed during ongoing operation.

## Revendications

1. Procédé de fabrication, à partir de préformes (3) en un matériau thermoplastique, de récipients (2) remplis, la préforme (3) respective étant au moins thermiquement conditionnée, après quoi elle est transformée au cours d'une phase de moulage et de remplissage en récipient (2) correspondant dans un moule (4.1) sous l'effet d'une pression de moulage et de remplissage (p2) exercée par le produit de remplissage qui y est amené, la préforme (3) étant, pendant la phase de moulage et de remplissage, temporairement au moins guidée et/ou étirée en sens axial (RA) par une barre d'étirage (27) et le récipient (2) respectif présentant au moins à la fin de la phase de moulage et de remplissage une pression intérieure correspondant à la pression de moulage et de remplissage (p2), **caractérisé en ce que** le récipient (2) moulé et rempli est, à l'achèvement de la phase de moulage et de remplissage (I), ramené à la pression atmosphérique ou ambiante (p0) au cours d'une phase de détente comportant au moins deux étapes (II - IV), le moulage et le remplissage du récipient (2) ayant lieu avec un produit de remplissage liquide non gazeux, c'est-à-dire ne contenant pas de CO2, et **en ce que**, après achèvement de la phase de moulage et de remplissage, une carbonation du produit de remplissage contenu dans le récipient est effectuée par introduction de CO2 gazeux ou d'H2CO3 liquide, de préférence après la réduction de la pression intérieure du récipient à une pression de carbonation et de pré-détente (p1.1) inférieure à la pression de moulage et de remplissage (p2).

2. Procédé selon la revendication 1, **caractérisé en ce que**, après achèvement de la phase de moulage et de remplissage, la pression intérieure (p2) du récipient (2) moulé et rempli est réduite au cours d'une phase de pré-détente (II) comportant au moins une étape à une pression de pré-détente (p1) de par exemple environ 1,2 à 2,5 bars, qu'au cours d'une phase de stabilisation (III) qui suit la phase de pré-détente (II) la pression intérieure du récipient (2) est maintenue à une pression constante ou quasiment constante correspondant à la pression de pré-détente (p1), et qu'au cours d'une phase de détente finale (IV) comportant au moins une étape qui suit la (les) phase(s) de stabilisation (III) une détente ramène la pression du récipient (2) à la pression atmosphérique ou ambiante (p0).

3. Procédé selon la revendication 2, **caractérisé en ce que** la variation dans le temps de la pression intérieure du récipient pendant la détente est choisie telle que la pente de la variation dans le temps à la fin d'au moins une phase, par exemple à la fin de la phase de pré-détente (II) est égale à la variation dans le temps de la pression au cours d'une phase suivante, par exemple de la (des) phase(s) de stabilisation (III), la transition entre la variation dans le temps de la pression intérieure du récipient à la fin de la phase de pré-détente et la variation dans le temps de la pression intérieure du récipient de la (des) phase(s) de stabilisation (III) se faisant de préférence avec une pente nulle ou quasiment nulle.

**4.** Procédé selon l'une des revendications précédentes, **caractérisé en ce que** la phase de pré-détente (II) comporte au moins deux étapes avec au moins deux phases partielles (11.1, 11.2), la pression intérieure du récipient étant réduite au cours d'une première phase partielle (11.1) à une pression de détente partielle (p1.1), et que, par exemple, les variation dans le temps de la pression intérieure du récipient au cours des phases partielles (11.1, 11.2) diffèrent de par le gradient de la pression ou son évolution ou la variation dans le temps de la pente et/ou, par exemple, présentent une pente différente à la transition entre au moins les deux phases partielles (11.1, 11.2).

**5.** Procédé selon l'une des revendications précédentes, **caractérisé en ce que** la pression intérieure de chaque récipient (2) après le moulage et le remplissage est maintenue au cours d'une phase de stabilisation supplémentaire à une pression constante ou quasiment constante correspondant à la pression de moulage et de remplissage (p2).

**6.** Procédé selon l'une des revendications précédentes, **caractérisé en ce que** le moulage et le remplissage de chaque récipient (2) avec un produit de remplissage carbonisé sont effectués au cours d'au moins deux phases de processus de façon à introduire au cours de différentes phases du produit de remplissage avec différentes teneurs en CO2 et/ou à différentes températures, par exemple au cours d'une première phase du processus un composant (K1) du produit de remplissage sans CO2 ou avec une teneur en CO2 réduite et au cours d'une autre phase du processus un autre composant (K2) avec une teneur en CO2 accrue.

**7.** Procédé selon la revendication 6, **caractérisé en ce que** le composant (K2) du produit de remplissage avec la concentration supérieure en CO2 a une température réduite par rapport à celle de l'autre composant (K1) et/ou est refroidi avant son introduction, et/ou **en ce que** le (les) composant(s) avec la concentration supérieure en CO2 est (sont) introduit(s) sous la couche de produit de remplissage déjà contenu dans le récipient (2) ou dans le récipient (2) en cours de formation.

**8.** Procédé selon l'une des revendications précédentes, **caractérisé en ce que** la pression de moulage et de remplissage peut atteindre 20 bars et est idéalement de 8 à 15 bars, et/ou **en ce que** la pression de pré-détente est de 10 % à 30 % de la pression de moulage et de remplissage (p2), par exemple d'au moins 1,2 bar et de 2,5 bars au plus et de préférence réglée sur une valeur de 1,4 bar à 2,3 bars ou de 1,2 bar à 1,7 bar, et/ou **en ce que** la pression de détente partielle (p1.1) est au maximum égale à la demi-différence entre la pression de moulage et de remplissage (p2) et la pression de pré-détente (p1) et correspond de préférence à environ 30 % de cette différence et a une valeur de 6 bars à 8 bars.

**9.** Procédé selon l'une des revendications précédentes, **caractérisé en ce que** la durée totale de la phase de pré-détente (II) est d'au moins 0,1 seconde et de 1,0 seconde au plus et de préférence comprise entre 0,2 et 0,4 seconde, et/ou **en ce que** la durée totale de la (des) phase(s) de stabilisation (III) qui sui(ven)t la phase de détente partielle (II) est d'au moins 0,5 seconde et de 2 secondes au plus et de préférence comprise entre 0,6 seconde et 1 seconde, et/ou **en ce que** la durée totale de la phase de détente finale (IV) est d'au moins 0,1 seconde et de 0,5 seconde au plus et de préférence comprise entre 0,1 seconde et 0,2 seconde.

**10.** Procédé selon l'une des revendications précédentes, **caractérisé en ce que** la phase de moulage et de remplissage (I) et/ou la phase de détente (II) et/ou leurs phases partielles (11.1, 11.2) et/ou la (les) phase(s) de stabilisation (III) et/ou la (les) phases de détente finale (IV) sont commandées en fonction de la position de rotation d'un rotor (12) présentant une pluralité de moules (4.1) et pouvant être entraîné en un mouvement de rotation autour d'un axe vertical de la machine (MA) et/ou sont commandées en fonction du temps, la commande tenant de préférence compte entre autres de paramètres afférents au produit de remplissage et/ou de paramètres spécifiques du récipient, par exemple la nature et/ou la température et/ou la teneur en CO2 du produit de remplissage, la valeur de la pression de moulage et de remplissage (p2), les dimensions et la nature des récipients (2), et la commande en fonction du temps étant contrôlée et/ou corrigée par ex. par des détecteurs qui détectent par exemple la quantité de produit de remplissage qui afflue et/ou la température et la pression.

**11.** Procédé selon l'une des revendications précédentes, **caractérisé en ce que** la durée de détente des récipients (2) respectifs pour réduire la pression de moulage et de remplissage (p2) et la ramener à la pression ambiante (p0) est réglée en fonction de la température du produit de remplissage, et ce notamment par variation de la durée de détente et/ou de celle de ses phases partielles et/ou du niveau de la pression de pré-détente et/ou de la (des) pression(s) de détente partielle, la durée de détente et/ou la durée d'au moins une phase partielle de détente augmentant avec la température du produit de remplissage.

**12.** Procédé selon l'une des revendications précédentes, **caractérisé en ce que** les niveaux de pression à choisir pour la détente et/ou la carbonation des récipients (2) respectifs et la réduction de la pression de moulage et de remplissage (p2) au niveau de la pression ambiante (p0) sont réglés en fonction de la température du produit de remplissage, et ce notamment par variation des niveaux de pression de carbonation (p1.2) et/ou de la (des) pression(s) de détente partielle, les niveaux de pression requis augmentant avec la température du produit de remplissage.

**13.** Procédé selon l'une des revendications précédentes, **caractérisé en ce que** l'espace intérieur de la préforme (3) est rincé avec un gaz inerte avant la phase de moulage et de remplissage, par exemple avec du $CO_2$, et/ou **en ce que** la préforme (3) est soumise en début de phase de moulage et de remplissage à une précontrainte avec un gaz inerte, par exemple avec du $CO_2$, de préférence avec une pression qui correspond ou correspond quasiment à la pression de moulage et de remplissage (p2), et/ou **en ce qu'**au moins les surfaces intérieures de la préforme (3) sont stérilisées avant la phase de moulage et de remplissage.

**14.** Dispositif de fabrication de récipients (2) remplis d'un produit liquide à partir de préformes (3) en un matériau thermoplastique au moins thermiquement conditionnées, avec au moins une station de moulage et de remplissage (4), avec au moins un conduit (31, 36, 37) pour liquides pour l'adduction contrôlée du produit de remplissage destiné à former et remplir le récipient (2) et provenant d'au moins une cuve (13, 14) pour produit de remplissage qu'elle contient sous pression de moulage et de remplissage (p2), la station de moulage et de remplissage (4) présentant une barre d'étirage (27) pour guider et étirer la préforme (3) correspondante temporairement au moins pendant la phase de moulage et de remplissage (I), le conduit (36) pour liquides étant en partie au moins formée par un canal (31) dans la barre d'étirage (27), et la station de moulage et de remplissage (4) présentant une surface de contact (28, 27) annulaire contre laquelle la préforme (3) et le récipient (2) qui se forme à partir de celle-ci s'appuient en position étanche au moins pendant la phase de moulage et de remplissage, **caractérisé par** au moins un conduit de gaz commandé (39, 40) qui, par au moins un canal de retour de gaz (38), par exemple un canal de retour de gaz (38) qui entoure annulairement la barre d'étirage (27), aboutit à l'intérieur de la surface de contact annulaire (28, 29), le dispositif étant conçu pour réaliser le moulage et le remplissage des récipients (2) avec un produit de remplissage liquide non gazeux, c'est-à-dire ne contenant pas de $CO_2$, et, après achèvement de la phase de moulage et de remplissage, effectuer une carbonation du produit de remplissage contenu dans le récipient par introduction de $CO_2$ gazeux ou d'$H_2CO_3$ liquide, de préférence après la réduction de la pression intérieure du récipient à une pression de carbonation et de pré-détente (p1.1) inférieure à la pression de moulage et de remplissage (p2).

**15.** Dispositif selon la revendication 14, **caractérisé en ce que** le (les) conduits de gaz (23, 40) présente(nt) au moins un élément (24, 25, 39) permettant de régler ou de commander en continu la pression (p1) et/ou le débit volumétrique du gaz.

**16.** Dispositif selon la revendication 14 ou 15, **caractérisé en ce que** le conduit de gaz (23, 40) est relié à un volume tampon, par exemple sous forme d'une cuve ou d'une cuve annulaire (15) ou sous forme d'une conduite annulaire, et **en ce que** le volume tampon est connecté à un dispositif de commande ou de régulation de la pression.

**17.** Dispositif selon l'une des revendications précédentes 14 à 16, **caractérisé en ce que** la (les) cuve(s) de produit de remplissage est (sont) réalisée(s) sous forme de cuve annulaire (13, 14) ou de conduite annulaire, et ce avec un volume correspondant à un multiple du volume de remplissage d'un récipient (2).

**18.** Dispositif selon l'une des revendications précédentes 14 à 17, **caractérisé en ce que** les stations de moulage et de remplissage (4) équipent un rotor (12) pouvant être entraîné en un mouvement de rotation autour d'un axe vertical de la machine (MA), et **en ce que** le rotor est équipé de la (des) cuve(s) de produit de remplissage (13, 14) et/ou de la cuve (15) constituant le volume tampon.

**19.** Dispositif selon l'une des revendications précédentes 14 à 18, **caractérisé en ce qu'**est prévue au moins une unité de refroidissement permettant de refroidir au moins une conduite d'adduction de produit de remplissage et/ou d'un composant du produit de remplissage et/ou la cuve de produit de remplissage, et notamment **en ce qu'**il est possible de mettre hors circuit la (les) unité(s) de refroidissement et/ou d'en régler la puissance de refroidissement en fonction de la température du produit.

**20.** Dispositif selon la revendication 19, **caractérisé en ce qu'**est prévue une unité de détection 43, laquelle est connectée à l'unité de commande 20 par des lignes de transmission données 44 ou par des liaisons de transmission de données sans fil et permettant de détecter des niveaux de remplissage et caractéristiques de marche DE CONSIGNE et EFFECTIFS et/ou la formation de mousse, et notamment **en ce que** l'unité de détection comprend un détecteur acoustique et/ou de vibrations comme par exemple un détecteur piézo-électrique.

**21.** Dispositif selon l'une des revendications précédentes 14 à 20, **caractérisé en ce que** sont prévus des capteurs de pression et des dispositifs de condensation et/ou de compression et/ou des valves réglables au moyen desquels les niveaux de pression de toutes les phases de processus peuvent être modifiés pendant le fonctionnement de la machine.

Fig. 1

13
14
15
20
RA
36
37
30
29
38
43
44
28
3.1
31
34
32
35
27.1
39
40
3.2
3.3
33
3

Fig. 2

13
14
RA
37
36
2.1
2.3
34
35
2
2.3
27
31
33
27.1

Fig. 3

p
[bar]
p2
p1
p0
I.
II.
III.
IV.
V.
t
[sec]

Fig. 4

Fig. 5

p2
p1.1
p1
p0
t
[sec]
I.
II.
II.1
II.2
III.
IV.
V.

Fig. 6

p2
p1.2
p1
p0
t
[sec]
I.
II.
II.1
II.3
II.2
III.
IV.
V.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- JP 2000043129 A
- WO 2009075791 A1
- DE OS4340291 A
- DE OS4212583 A
- DE OS2352926 A
- EP 0331137 A1
- EP 0375912 A1